# EUROPÄISCHE PATENTSCHRIFT

(11) **EP 1 949 673 B1**
(45) Veröffentlichungstag und Bekanntmachung des Hinweises auf die Patenterteilung: **26.08.2015**
(21) Anmeldenummer: 06818463.9
(22) Anmeldetag: 10.11.2006
(51) Int. Cl.: H04N 5/335, G01N 21/57, G01N 21/89

(54) **VERFAHREN ZUR BILDAUFNAHME**
METHOD FOR IMAGE RECORDING
PROCÉDÉ DE PRISE DE VUE

(30) Priorität: 10.11.2005 DE 102005054465; 13.07.2006 DE 102006033391; 07.09.2006 DE 102006041932
(43) Veröffentlichungstag der Anmeldung: 30.07.2008
(60) Teilanmeldung: 14198533.3
(73) Patentinhaber: SAC Sirius Advanced Cybernetics GmbH, 76227 Karlsruhe (DE)
(72) Erfinder: WAGNER, Christoph, 75203 Königsbach-Stein (DE)
(74) Vertreter: Gleiss, Alf-Olav
(86) Internationale Anmeldenummer: PCT/EP2006/010790
(87) Internationale Veröffentlichungsnummer: WO 2007/054332

(56) Entgegenhaltungen:
- EP-A- 1 030 173
- EP-A1- 0 898 163
- WO-A-2004/051186
- US-A1- 2004 183 925
- US-A1- 2004 183 940
- US-A1- 2005 151 866
- US-B1- 6 452 632
- NAYAR S K ET AL: "Adaptive dynamic range imaging: optical control of pixel exposures over space and time" PROCEEDINGS OF THE EIGHT IEEE INTERNATIONAL CONFERENCE ON COMPUTER VISION. (ICCV). NICE, FRANCE, OCT. 13 - 16, 2003, INTERNATIONAL CONFERENCE ON COMPUTER VISION, LOS ALAMITOS, CA : IEEE COMP. SOC, US, Bd. VOL. 2 OF 2. CONF. 9, 13. Oktober 2003 (2003-10-13), Seiten 1-8, XP010662526 ISBN: 0-7695-1950-4
- SMITH ET AL: "Dynamic photometric stereo-a new technique for moving surface analysis" IMAGE AND VISION COMPUTING, GUILDFORD, GB, Bd. 23, Nr. 9, 1. September 2005 (2005-09-01), Seiten 841-852, XP005006117 ISSN: 0262-8856
- WOODHAM R J ED - INSTITUTE OF ELECTRICAL AND ELECTRONICS ENGINEERS: "DETERMINING SURFACE CURVATURE WITH PHOTOMETRIC STEREO" PROCEEDINGS OF THE INTERNATIONAL CONFERENCE ON ROBOTICS AND AUTOMATION. SCOTTSDALE, MAY 15 - 19, 1989, WASHINGTON, IEEE COMP. SOC. PRESS, US, Bd. VOL. 1, 15. Mai 1989 (1989-05-15), Seiten 36-42, XP000047432 ISBN: 0-8186-1938-4
- NAYAR S K ET AL: "High Dynamic Range Imaging: Spatially Varying Pixel Exposures", PROCEEDINGS 2000 IEEE CONFERENCE ON COMPUTER VISION AND PATTERN RECOGNITION. CVPR 2000. HILTON HEAD ISLAND, SC, JUNE 13-15, 2000; [PROCEEDINGS OF THE IEEE COMPUTER CONFERENCE ON COMPUTER VISION AND PATTERN RECOGNITION], LOS ALAMITOS, CA : IEEE COMP., 13 June 2000 (2000-06-13), pages 472-479, XP002236923, ISBN: 978-0-7803-6527-8

## Beschreibung

Die Erfindung betrifft ein Verfahren zur Aufnahme einer Anzahl von Bildern gemäß Oberbegriff des Anspruchs 1 sowie ein Verfahren zur Aufnahme einer Anzahl von Bildern gemäß Oberbegriff des Anspruchs 2.

### Problemstellung

Heute gibt es bereits eine Vielzahl von Messprinzipien, mit denen auf optischem Weg die dreidimensionale Form von Gegenständen erfasst werden kann (EP 1 030 173 A1). Zu nennen sind die Prinzipien der Triangulation (Laserlichtschnittverfahren, Streifenprojektion, Stereoverfahren, Photogrammetrie, Shape from Shading), interferometrische Verfahren (Laserinterferometrie, Weißlichtinterferometrie, holografische Verfahren) und Laufzeitverfahren (hochfrequente Modulation der Lichtquelle). All diesen Verfahren ist gemeinsam, dass mehrere Kamerabilder aufgenommen werden müssen, um daraus ein einziges 3D-Bild zu erzeugen. Bei den meisten dieser Verfahren können diese Bilder nicht gleichzeitig aufgenommen werden, sondern müssen nacheinander aufgenommen werden. Im Gegensatz dazu werden gewöhnliche fotografische 2D-Aufnahmen mit nur einem Bild erfasst. Dies trifft insbesondere auch auf die Bilderfassung in der industriellen Bildverarbeitung zu.

Die prinzipielle Schwierigkeit liegt darin, dass bei Einsatz von optischen 3D-Sensoren von Natur aus mehrere Kameraaufnahmen erforderlich sind. Dies liegt daran, dass jeder 3D-Sensor drei Unbekannte für jeden Punkt des zu vermessenden Gegenstandes zu bestimmen hat:
- Den Ort des Prüfgegenstandspunktes, im Folgenden als Form bezeichnet,
- die lokale Reflektivität des Prüfgegenstands, die im Folgenden als Textur bezeichnet wird (Schwarz/Weiß), und
- die lokale Helligkeit des Umgebungslichtes an jedem Punkt.

Zur Bestimmung von drei Unbekannten sind in der Regel auch drei Gleichungen nötig, bezogen auf die 3D-Formerfassung sind das drei Kamerabilder mit der lokalen Helligkeit des Prüfgegenstands, wobei die drei Kamerabilder mit drei verschiedenen Beleuchtungssituationen aufgenommen werden. Bei den 2D-Verfahren ist dies nicht nötig, da hier immer nur die Summe aller Einflüsse, also von Form, Textur und Umgebungslicht gemeinsam in einem Bild wiedergegeben wird.

Die Anzahl der Unbekannten reduziert sich auf zwei Unbekannte, sofern sämtliches Umgebungslicht abgeschattet werden kann. Dann sind nur zwei Bilder mit zwei verschiedenen Beleuchtungssituationen notwendig, um die 3D-Gestalt des Prüfgegenstandes zu erfassen.

Es gibt Ansätze, auch bei 3D-Verfahren alle notwendigen Informationen mit einem einzigen Kamerabild zu gewinnen. Ein solches Verfahren ist das des räumlichen Phasenschiebens. Es ist in seiner Anwendung beschränkt auf die Interferometrie und die Streifenprojektion. Bei diesen Verfahren werden die unterschiedlichen Beleuchtungssituationen durch ein Interferenzmuster, beziehungsweise ein Streifenmuster realisiert, die Bereiche unterschiedlicher Beleuchtungsstärken aufweisen. An drei benachbarten Bildpunkten können also automatisch drei unterschiedliche Beleuchtungssituationen erfasst werden, hieraus können die drei Unbekannten dann berechnet werden. Das Verfahren ist allerdings nicht anwendbar für die Shape from Shading Verfahren, insbesondere nicht für das photometrische Stereo und die photometrische Deflektometrie (siehe WO2004051186, DE102005013614), auch nicht für Laufzeitverfahren, da hier ein Gegenstand aus unterschiedlichen Richtungen zu unterschiedlichen Zeiten beleuchtet wird und somit keine gleichzeitige Aufnahme mehrerer Beleuchtungssituationen möglich ist.

Für viele Anwendungen, insbesondere für Anwendungen in der industriellen Bildverarbeitung, ist es aber wichtig, dass alle Bildinformationen gleichzeitig oder nahezu gleichzeitig aufgenommen werden. Nur so können auch Prüfgegenstände in Bewegung ohne Bewegungsunschärfe vermessen und geprüft werden. Hierzu wird die Belichtungszeit einer Kamera auf ein Minimum reduziert oder eine Blitzbeleuchtung gewählt. Die Kameras sind mit einem so genannten elektronischen Shutter zur Steuerung der Belichtungszeit ausgerüstet. Alle Bildpunkte (Pixel) des Kamerachips werden gleichzeitig für eine vorgegebene Zeit fotoempfindlich geschaltet. Typische Belichtungszeiten reichen von einigen Millisekunden bis hinunter zu einigen Zig Mikrosekunden. Im Anschluss an die Belichtung erfolgt der Ausleseprozess des Kamerachips. Die Belichtung kann dabei weit schneller erfolgen als das Auslesen , welches üblicherweise einige Zig Millisekunden dauert. Eine Bildaufnahmeperiode setzt sich also zusammen aus Belichtung und Auslesen des Kamerachips. Die Dauer der Bildaufnahmeperiode wird dabei bestimmt durch die Auslesezeit, die wesentlich länger dauert als die Belichtung. Durch die lange Bildaufnahmeperiode reduziert sich die Bildwiederholfrequenz, d.h. die Anzahl der Bilder, die pro Sekunde aufgenommen werden können. Die Bildwiederholfrequenz wird also ebenfalls durch die Auslesezeit bestimmt. Die Ausnahme bilden speziell ausgelegte und teure Hochgeschwindigkeitskameras, die beispielsweise einige Tausend Bilder pro Sekunde aufnehmen können. Damit weisen die optischen 3D-Verfahren einen entscheidenden Nachteil auf. Anstatt einer Belichtungszeit von wenigen Zig Mikrosekunden fällt bereits für eine Serie von beispielsweise vier Bildern (beispielsweise jeweils 20 ms pro Bildaufnahme) eine Aufnahmezeit von 80 ms an, mehr als das Tausendfache gegenüber den 2D-Verfahren.

Aufgabe der Erfindung ist es, ein Verfahren zur optischen Formerfassung zu schaffen, das nur einer sehr kurzen Belichtungszeit bedarf.

### Lösung

Die Aufgabe wird gelöst durch die Gegenstände der unabhängigen Ansprüche. Vorteilhafte Ausgestaltungen ergeben sich aus den Unteransprüchen.

Zur Lösung der genannten Aufgaben wird insbesondere ein Verfahren geschaffen, das allgemein für optische 3D-Verfahren geeignet ist und es ermöglicht, innerhalb kürzester Zeit mehrere Bilder aufzunehmen.

Die Erfindung wird im Folgenden anhand der Zeichnung näher erläutert. Es zeigen:
- Abbildung 1a: eine Prinzipskizze eines Kamerachips mit einer Anzahl von Pixelgruppen;
- Abbildung 1b: ein beispielhafter zeitlicher Verlauf von Shuttersignalen;
- Abbildung 2a bis: d eine Prinzipskizze der photometrischen Deflektometrie mit vier Shuttern und vier Beleuchtungen;
- Abbildung 2e: eine Prinzipskizze des photometrischen Stereo mit vier Shuttern und vier Beleuchtungen;
- Abbildung 3a bis: d eine Prinzipskizze des Streifenprojektionsverfahrens mit vier Shuttern und vier Beleuchtungen;
- Abbildung 3e: eine Prinzipskizze der Interferometrie mit vier Shuttern und vier Beleuchtungen;
- Abbildung 4a: eine schematische Darstellung eines Teilbereichs eines abgewandelten Kamerachips;
- Abbildung 4b: ein beispielhafter zeitlicher Verlauf von Shuttersignalen;
- Abbildung 5: ein Beispiel eines Kamerachips C;
- Abbildung 6: ein Diagramm zur Darstellung der zeitlichen Steuerung von Shutter- und Beleuchtungssignalen;
- Abbildung 7: ein abgewandeltes Beispiel eines Kamerachips C;
- Abbildung 8a bis: d eine Prinzipskizze der photometrischen Deflektometrie bei einer linearen Bewegung des Prüfgegenstands mit vier Beleuchtungen und vier Kamerachipzeilen;
- Abbildung 8e: eine Prinzipskizze der photometrischen Deflektrometrie bei einer Drehbewegung des Prüfgegenstands mit vier Beleuchtungen und vier Kamerachipzeilen;
- Abbildung 9a: oberes Diagramm: den zeitlichen Verlauf von vier aktiven Kamerachipzeilen als Funktion des Orts auf der Prüfgegenstandsoberfläche; unteres Diagramm: korrespondierende aktive Beleuchtungen;
- Abbildung 9b: eine schematische Darstellung eines Speicherbereichs zur Speicherung ausgelesener Kamerachipbereiche;
- Abbildung 10a: eine abgewandelte schematische Darstellung zur Speicherung ausgelesener Kamerachipbereiche in einem Speicherbereich;
- Abbildung 10b: ein abgewandeltes Diagramm zur Verdeutlichung des zeitlichen und räumlichen Ablaufs der Aktivierung von Kamerachipzeilen bei der Aufnahme unterschiedlicher Bilder, unteres Diagramm: korrespondierende aktive Beleuchtungen;
- Abbildung 10c: eine schematische Darstellung zur Speicherung ausgelesener Kamerachipbereiche in einem Speicherbereich;
- Abbildung 11a: eine Prinzipskizze des photometrischen Stereo bei einer linearen Bewegung des Prüfgegenstands;

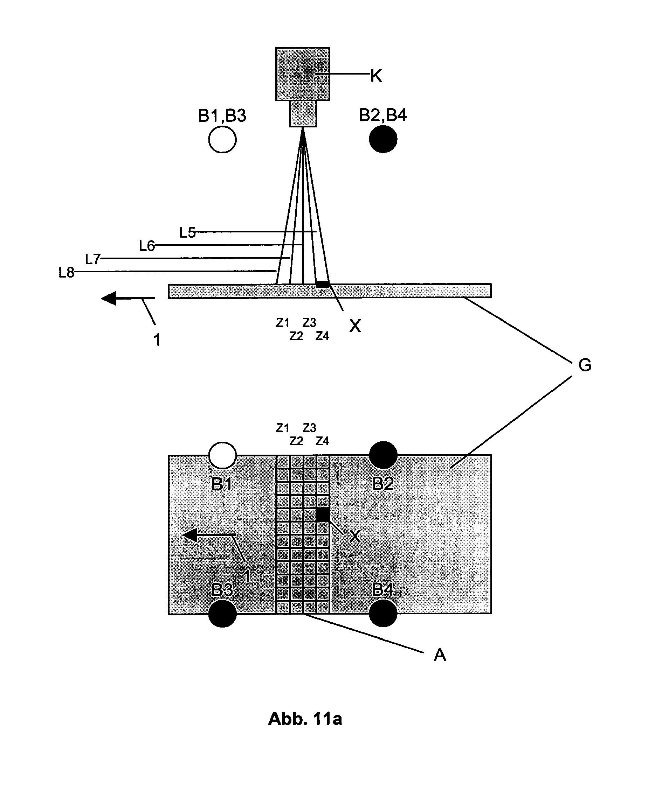

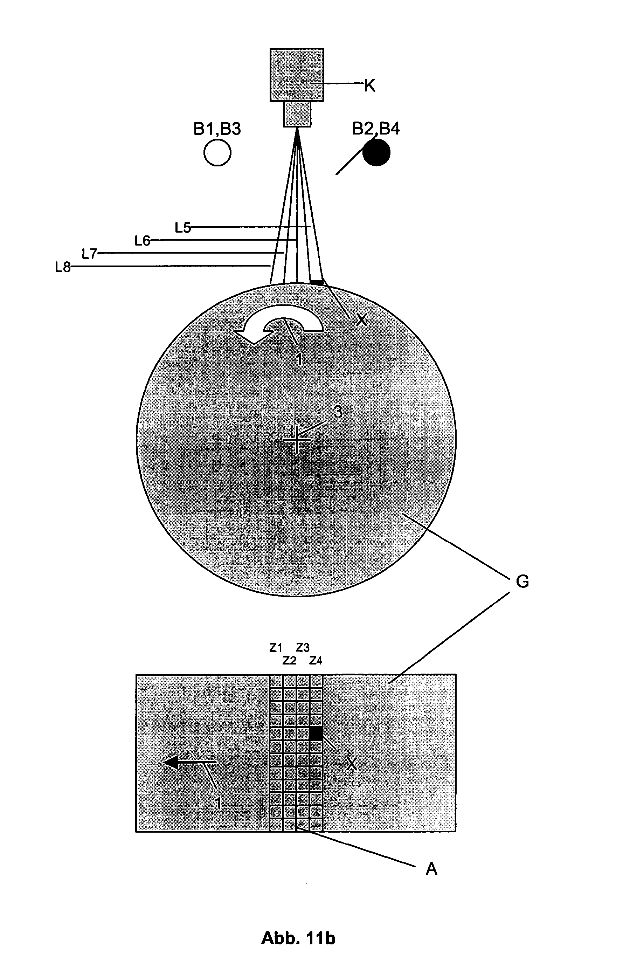

- Abbildung 11 b: eine Prinzipskizze des photometrischen Stereo bei einer Drehbewegung des Prüfgegenstands;

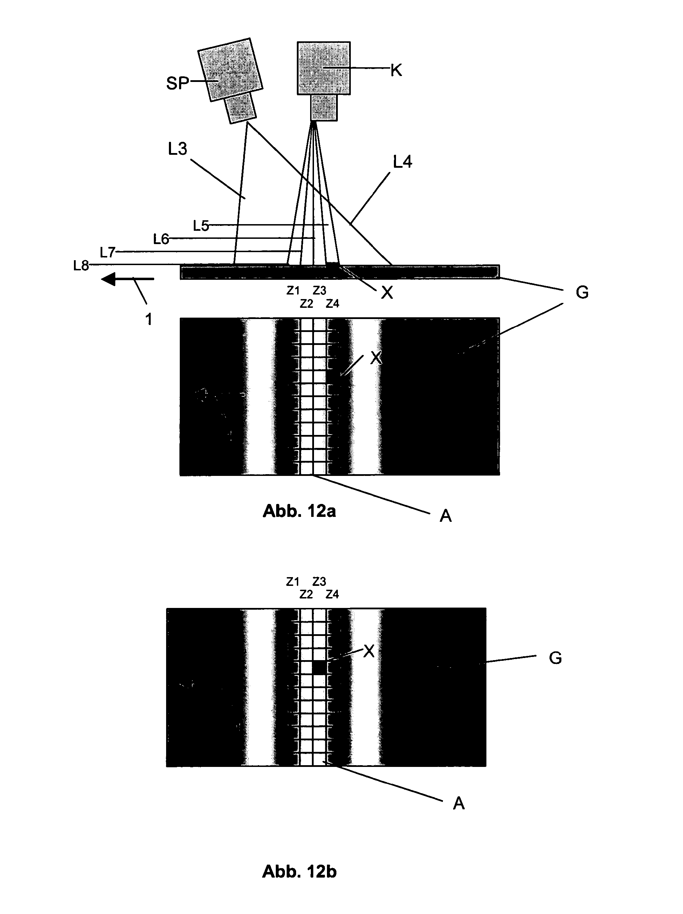

- Abbildung 12a bis d eine: Prinzipskizze des Streifenprojektionsverfahrens bei einer linearen Bewegung;

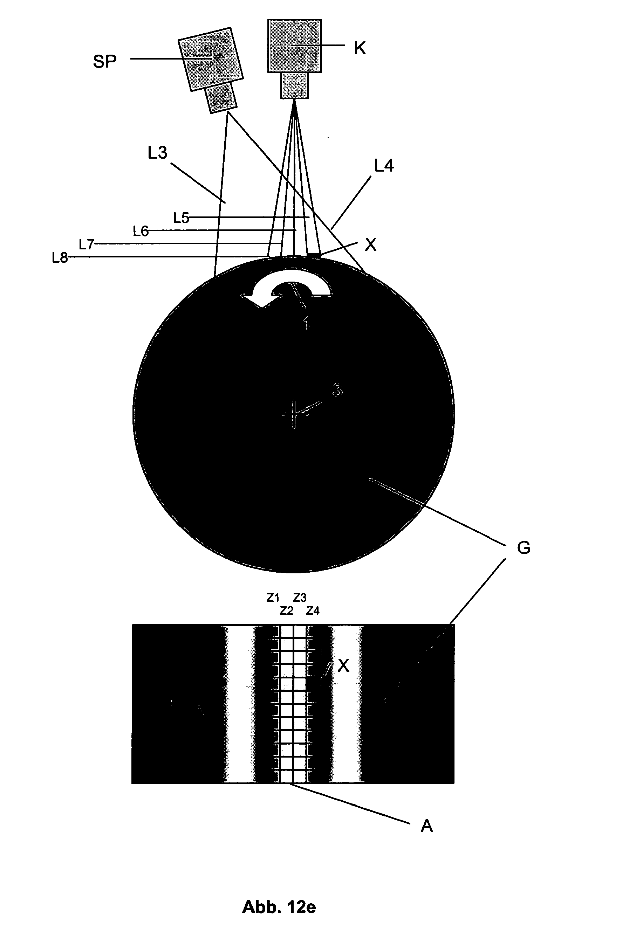

- Abbildung 12e: eine Prinzipskizze des Streifenprojektionsverfahrens bei einer Drehbewegung des Prüfgegenstands;

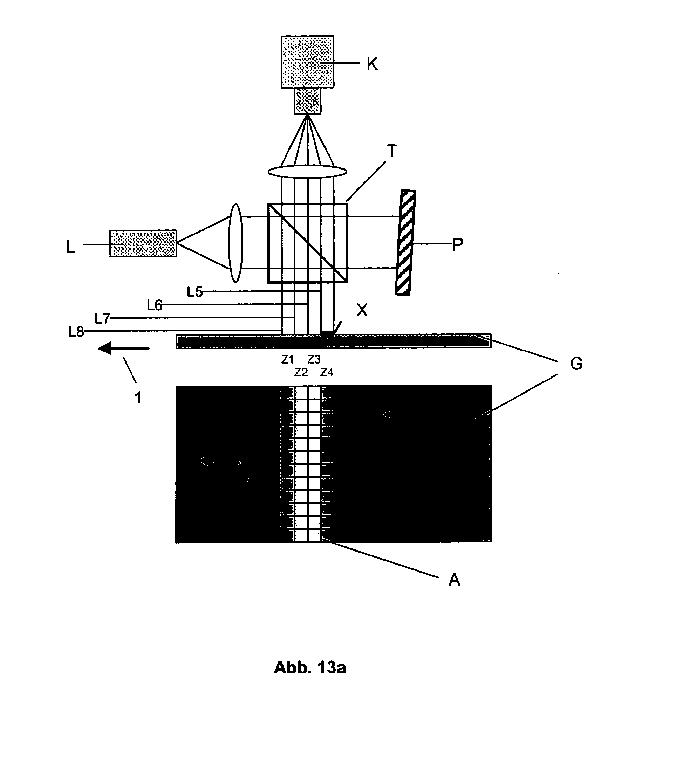

- Abbildung 13a: eine Prinzipskizze der interferometrischen Prüfung bei einer linearen Bewegung des Prüfgegenstands;

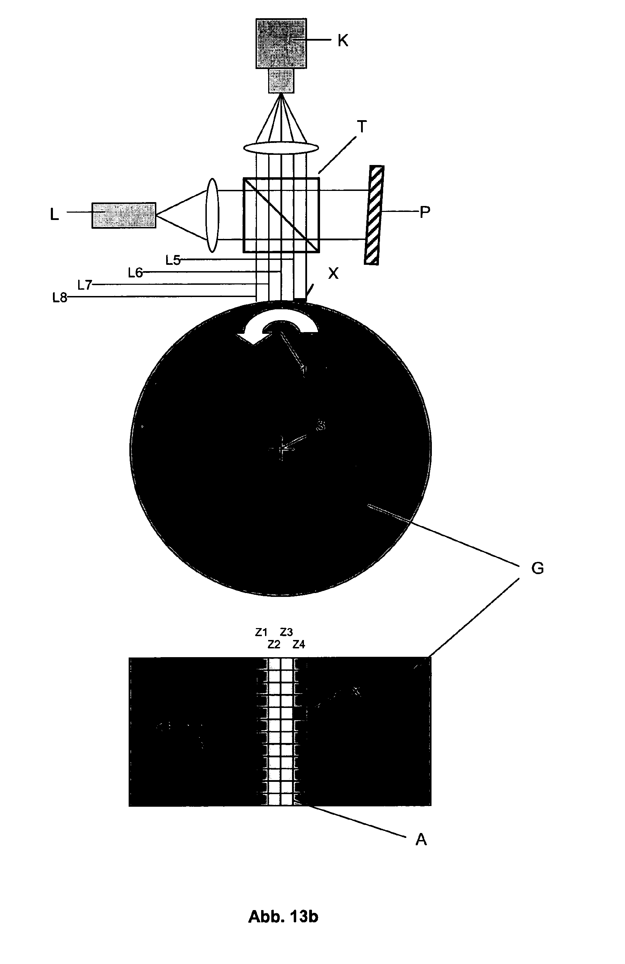

- Abbildung 13b: eine Prinzipskizze der interferometrischen Prüfung bei einer Drehbewegung des Prüfgegenstands;

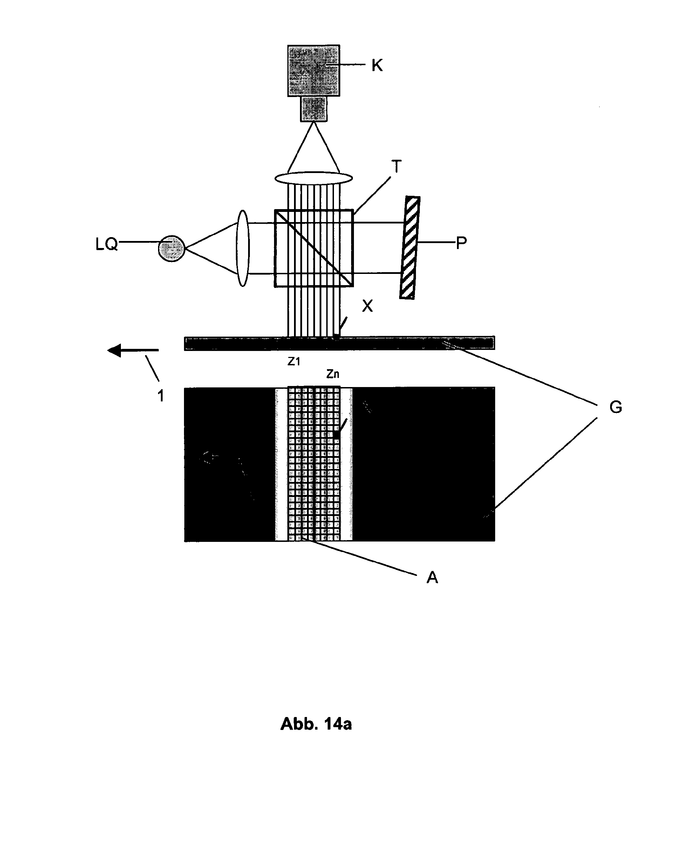

- Abbildung 14a: eine Prinzipskizze des Weißlichtinterferometrieverfahrens bei einer linearen Bewegung des Prüfgegenstands;

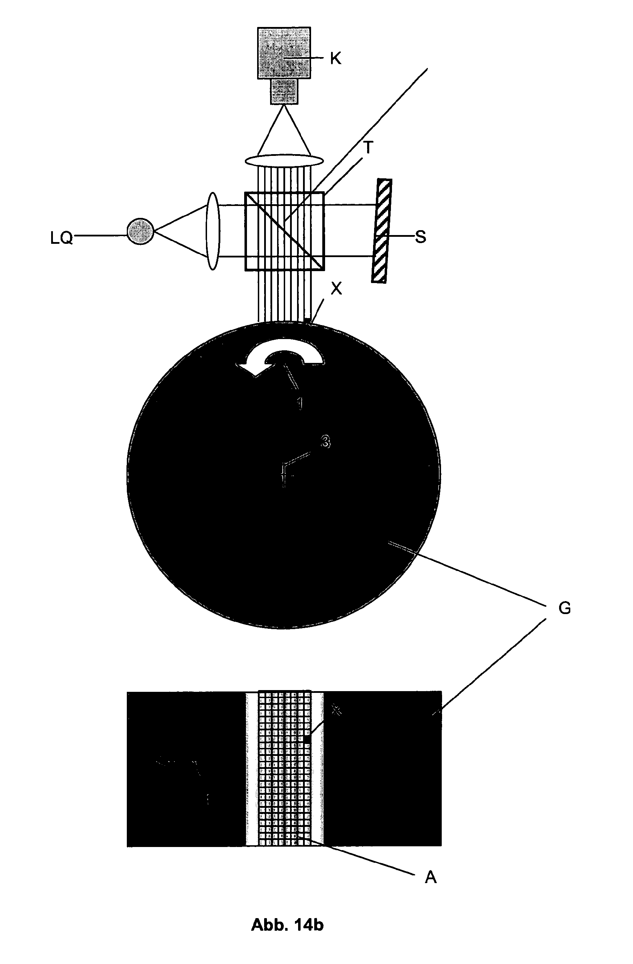

- Abbildung 14b: eine Prinzipskizze des Weißlichtinterferometrieverfahrens bei einer Drehbewegung des Prüfgegenstands;

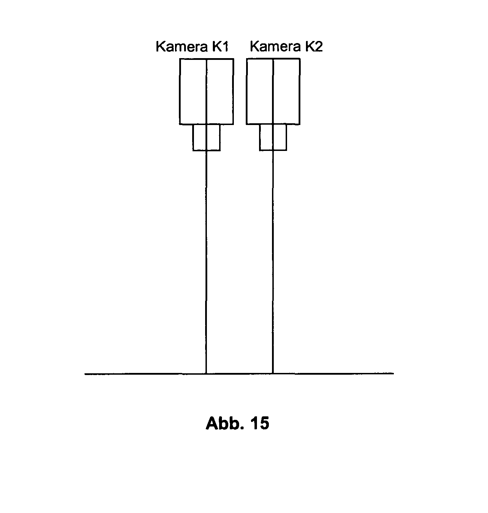

- Abbildung 15: eine Anordnung zweier Kameras senkrecht über einer Ebene, in der ein Prüfgegenstand angeordnet ist;

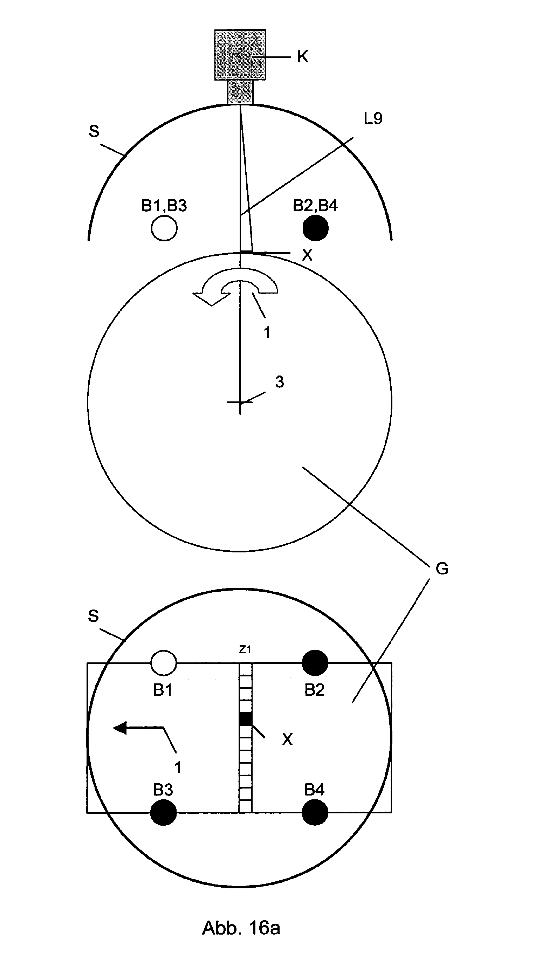

- Abbildung 16a bis d: eine abgewandelte Prinzipskizze der photometrischen Deflektometrie bei einer Drehbewegung des Prüfgegenstands mit vier Beleuchtungen und einer Zeile, und

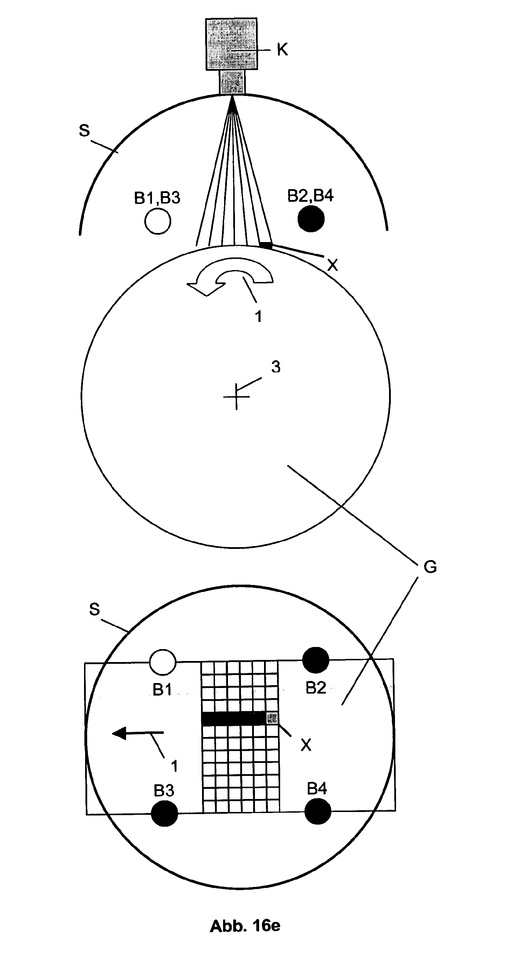

- Abbildung 16e: eine Prinzipskizze der photometrischen Deflektometrie bei einer hoch lichtempfindlichen Zeilenkamera.

### Neuartiger Kamerachip

Ein optischer 3D-Sensor, der eine wesentlich kürzere Aufnahmezeit erlaubt, wird auch als "Single Shot 3D-Sensor" bezeichnet.

Es wird ein nicht zur Erfindung gehörender Kamerachip C beschrieben. Es kommt ein speziell ausgeführter Kamerachip C bei der Bildaufnahme, beispielsweise in CCD- oder CMOS-Technologie, einer elektronischen Kamera K zum Einsatz.

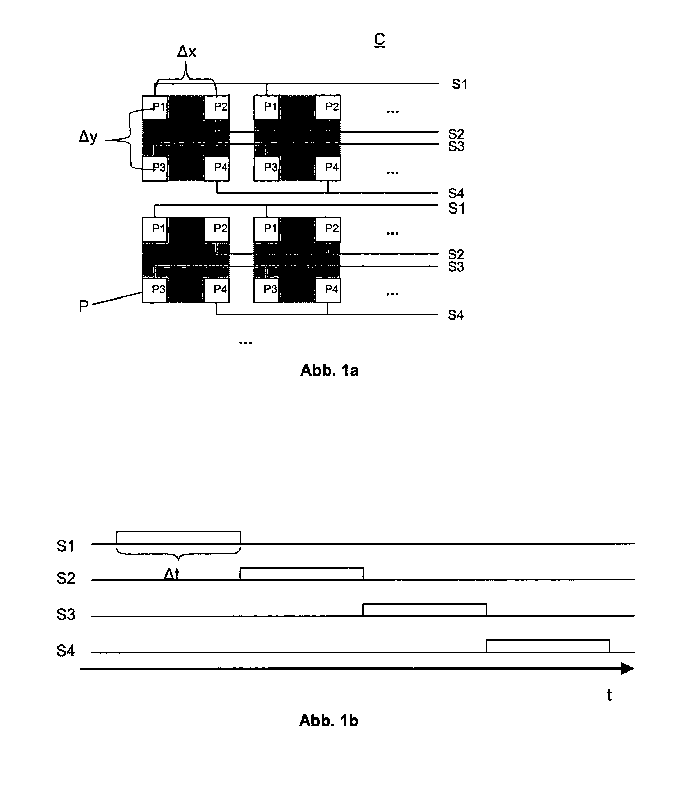

Abbildung 1 a zeigt einen schematischen Ausschnitt eines Kamerachips C mit mehreren Pixeln P. Einzelne Pixel P sind dabei zu Pixelgruppen P1, P2, P3 und P4 zusammengefasst. Diese Pixelgruppen P1 bis P4 werden über verschiedene elektronische Shuttersignale S1, S2, S3, S4 angesteuert, also lichtempfindlich geschaltet. Dabei ist jeder Pixelgruppe P1 bis Pn genau ein Shutter S1 bis Sn zugeordnet. Einzelne Pixel P sind in einem Abstand Δx bzw. Δy zueinander angeordnet. Dieser Abstand wird vorzugsweise klein gewählt, um eine flächendeckende Anordnung der Pixel P zu erreichen, sodass die Ausbeute der Kamerachipfläche groß ist.

In den folgenden Abbildungen werden nur einige Pixel P bzw. Pixelgruppen P1 bis Pn des Kamerachips C dargestellt. Das jeweilige Muster ist allerdings sowohl in horizontaler Richtung als auch senkrecht dazu fortgesetzt zu denken, bis die gewünschte Pixelanzahl P, beispielsweise zwei Megapixel, erreicht ist. Diesen Pixeln sind Shutter Sn zugeordnet. Unter einem elektronischen Shutter versteht man eine Belichtungssteuerung, die ein Pixel P für eine bestimmte Zeit lichtempfindlich schalten bzw. unempfindlich schalten kann. Auf diese Weise können benachbarte Pixel P verschiedener Pixelgruppen P1 bis Pn in sehr schneller zeitlicher Folge mit unterschiedlichen Bildern belichtet werden. Erst, wenn alle Pixelgruppen P1 bis Pn nacheinander belichtet worden sind, wird der Kamerachip C ausgelesen. Es liegen beim Auslesen also so viele Bilder in Teilbereichen des Kamerachips C vor, wie Pixelgruppen von Shuttern nacheinander belichtbar geschaltet wurden. Da der Ausleseprozess die Bildperiode, also die Summe aus Belichtungszeit und Auslesezeit, und damit die Bildwiederholfrequenz, also die Anzahl aufgenommener Bilder pro Sekunde bestimmt, können auf diese Weise innerhalb kürzester Zeit mehrere Bilder aufgenommen werden, ohne dass nach jedem Belichtungsprozess ein vergleichsweise langwieriger Ausleseprozess abgewartet werden muss.

Abbildung 1b zeigt einen zeitlichen Verlauf der verschiedenen Shuttersignale, t deutet dabei die Zeitachse an. Die Shuttersignale sind als Rechteckimpulse über ein bestimmtes Zeitintervall Δt dargestellt. Die als Beleuchtungen bezeichneten Lichtquellen sind mit den Shuttersignalen zu synchronisieren, so z. B. Beleuchtung B1 mit Shutter S1, Beleuchtung B2 mit Shutter S2 usw. Beispielsweise wird der Shutter S1 für 20 Mikrosekunden aktiv geschaltet, danach der Shutter S2, S3 und S4 für jeweils 20 Mikrosekunden. Nach nur 80 Mikrosekunden liegen dann in jeweils vier benachbarten Pixeln vier zu unterschiedlichen Zeitpunkten und mit unterschiedlichen Beleuchtungssituationen aufgenommene Bilder vor, die entsprechend einem bekannten 3D-Verfahren, also beispielsweise Shape from Shading, gewonnen werden und dann aus dem Kamerachip ausgelesen werden können. Insbesondere ist auch das Verfahren des photometrischen Stereo und der photometrischen Deflektometrie mit vier Beleuchtungen vorteilhaft möglich (siehe WO2004051186, DE102005013614). Theoretisch sind zwei Beleuchtungen ausreichend, um ein 3D-Bild zu erzeugen. Vier Beleuchtungen werden jedoch bevorzugt eingesetzt, da hier die Aufnahmen unempfindlicher gegen Störungen, z.B. Abweichungen in der Anordnung der Beleuchtungen oder Helligkeitstoleranzen sind.

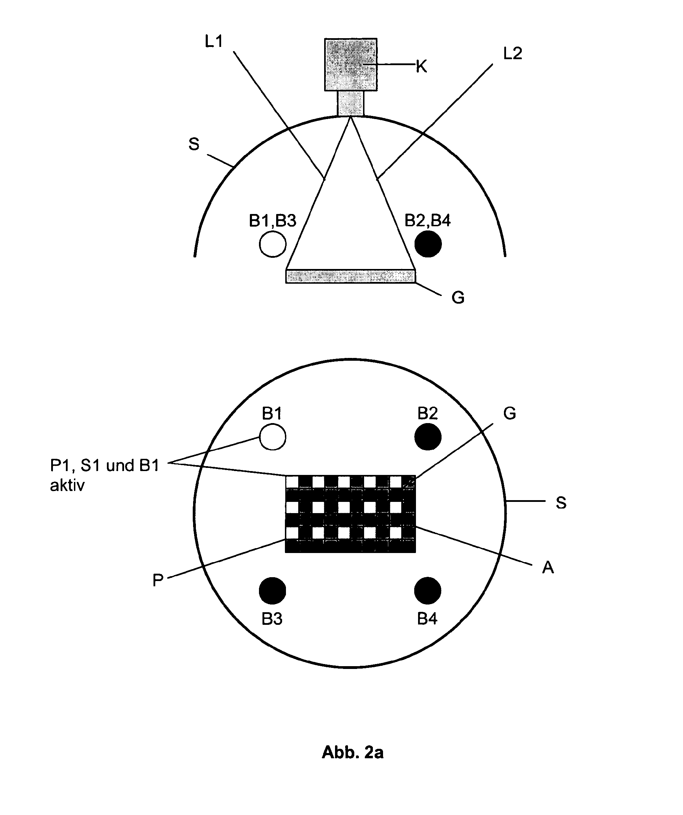

Die Abbildungen 2a bis 2d zeigen eine Anwendung für die photometrische Deflektometrie mit vier Beleuchtungen B1 bis B4. Die Photometrische Deflektometrie ist ein Verfahren der optischen 3D-Vermessung. Es stellt eine Kombination des photometrischen Stereoverfahrens und der Deflektometrie dar. Das Verfahren ist für spiegelnde, glänzende und matte Oberflächen geeignet. Hierzu wird ein geeignet geformter Streukörper, z. B. eine Halbkugel, aus verschiedenen Richtungen beleuchtet. Dieser Streukörper wiederum beleuchtet den Prüfgegenstand. Für jede Beleuchtungsrichtung wird jeweils ein Kamerabild aufgenommen. Die Auswertung der verschiedenen Bilder gestaltet sich ähnlich wie beim photometrischen Stereoverfahren. Das Verfahren wird in WO2004051186 detailliert beschrieben.

Im oberen Teil der Abbildungen 2a bis 2d ist jeweils eine Seitenansicht des Aufbaus dargestellt. Eine Kamera K ist dabei durch eine Öffnung in dem Streukörper S senkrecht auf den Prüfgegenstand G ausgerichtet. Das auf den Prüfgegenstand G ausgerichtete Blickfeld der Kamera K wird dabei durch zwei Linien L1 und L2 angedeutet. Die mit B1 bis B4 bezeichneten Kreise stellen dabei die Beleuchtungen dar. Die Beleuchtungen B1 und B2 sind, wie in der Seitenansicht nicht erkennbar ist, in die Bildebene hinein versetzt angeordnet. Die hell dargestellte Beleuchtung ist jeweils aktiv.

Im unteren Teil der Abbildungen 2a bis 2d ist jeweils eine Draufsicht des Aufbaus zu sehen. Die Kamera K ist in dieser Ansicht nicht dargestellt, um die Sicht auf den Prüfgegenstand G zu ermöglichen. Der hell dargestellte Kreis ist jeweils die momentan aktive Beleuchtung. Auf den Prüfgegenstand G ist ein Pixelmusterausschnitt A eines Kamerachips C projiziert worden, um die Synchronisierung der einzelnen Beleuchtungen B1 bis B4 mit dem Kamerachip C zu verdeutlichen. Die hellen Karos stellen einzelne Pixel P einer Pixelgruppe Pn dar, die durch einen Shutter Sn aktiviert, das heißt lichtempfindlich geschaltet sind. Ebenfalls ersichtlich ist der untere Rand des Streukörpers S.

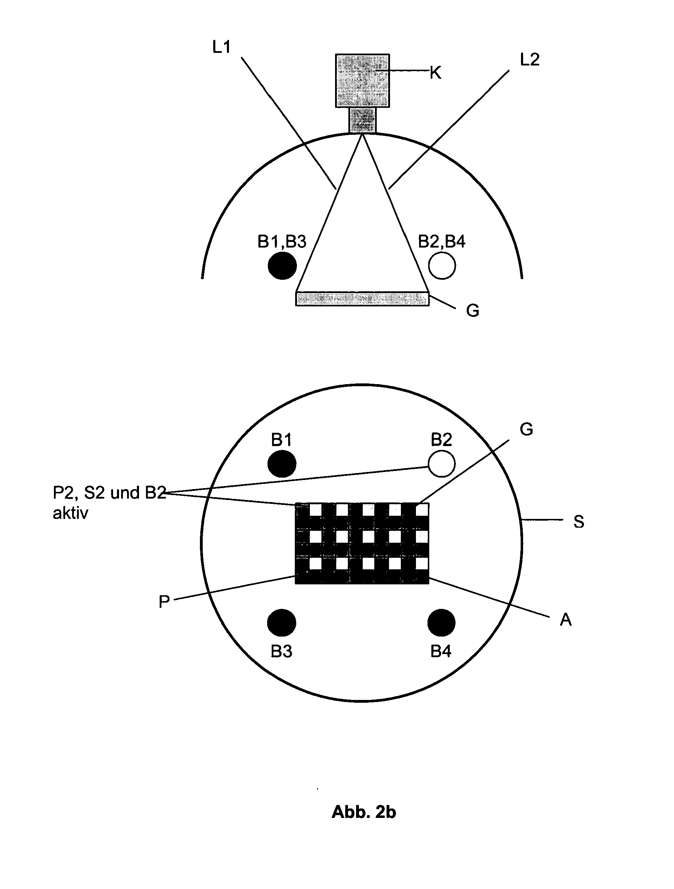

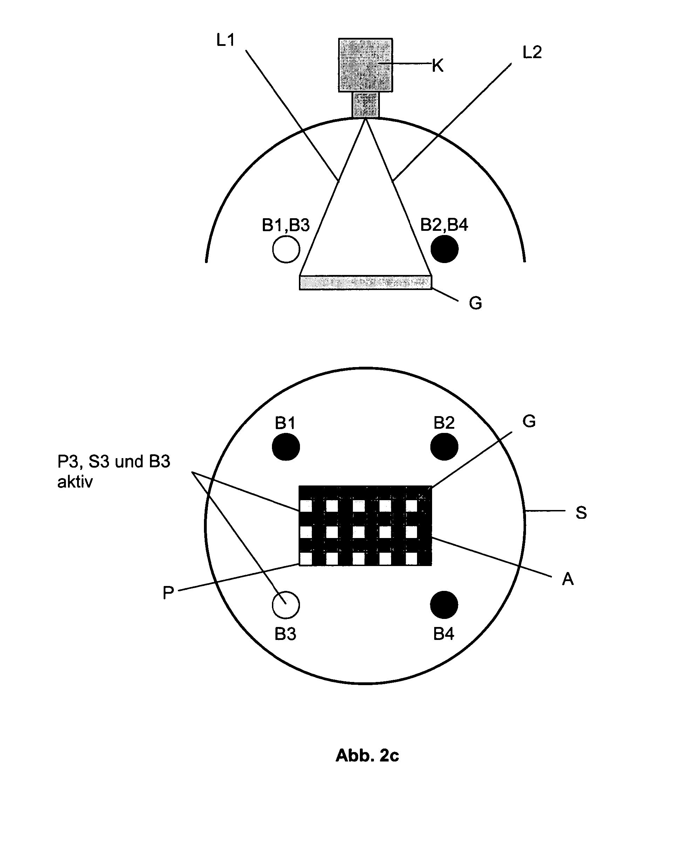

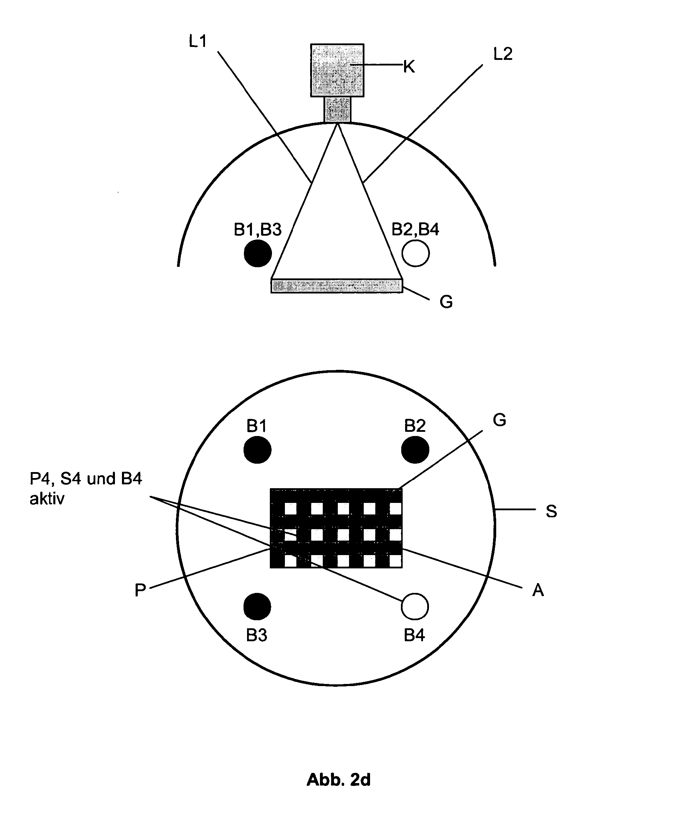

Wie aus dem unteren Teil der Abbildung 2a ersichtlich ist, sind zunächst die Beleuchtung B1, die Pixelgruppe P1 und der Shutter S1 aktiv. Nach einer vorgegebenen Belichtungszeit wechselt die Beleuchtung zu B2, das heißt Beleuchtung B1 wird abgeschaltet und B2 eingeschaltet. Entsprechend sind Pixelgruppe P2 und Shutter S2 aktiv, wie in Abbildung 2b dargestellt ist. Die Abbildungen 2c und 2d zeigen, wie sich der Zyklus mit Beleuchtung B3 und B4 entsprechend fortsetzt.

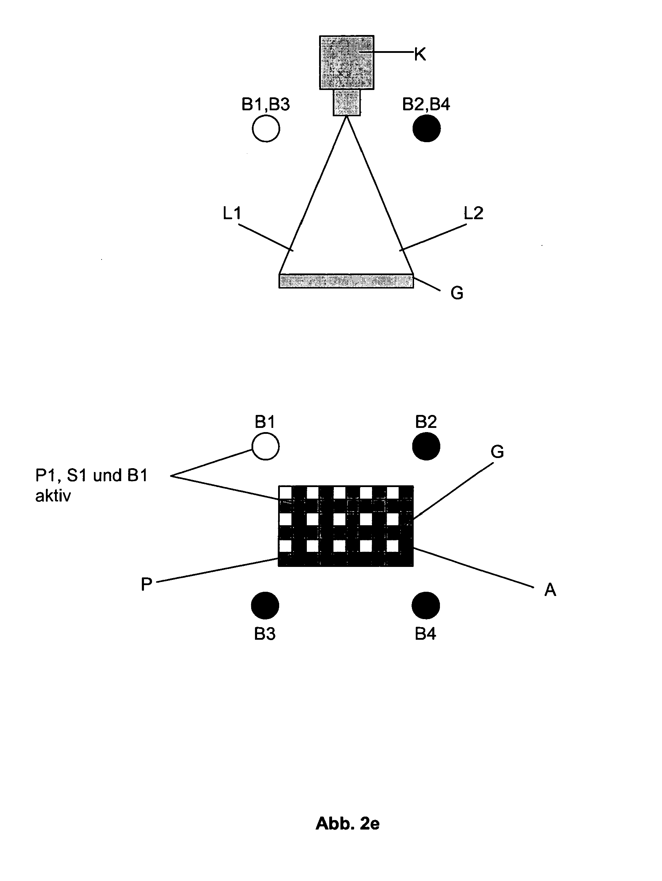

Abbildung 2e zeigt eine Anwendung für das photometrische Stereo. Wie aus dieser Abbildung ersichtlich ist, kommt bei diesem Verfahren kein Streukörper zum Einsatz, auch sind die Beleuchtungen B1 bis B4 in einem größeren Abstand zum Prüfgegenstand angeordnet. Ansonsten wird auf die Beschreibung der vorhergehenden Figuren verwiesen. Wiederum sind die hellen, als Kreise dargestellten Beleuchtungen aktiviert. Aus Gründen der Einfachheit ist nur die aktive Beleuchtung B1 des ersten Zyklus gezeigt, die anderen Beleuchtungen schließen sich analog dazu an.

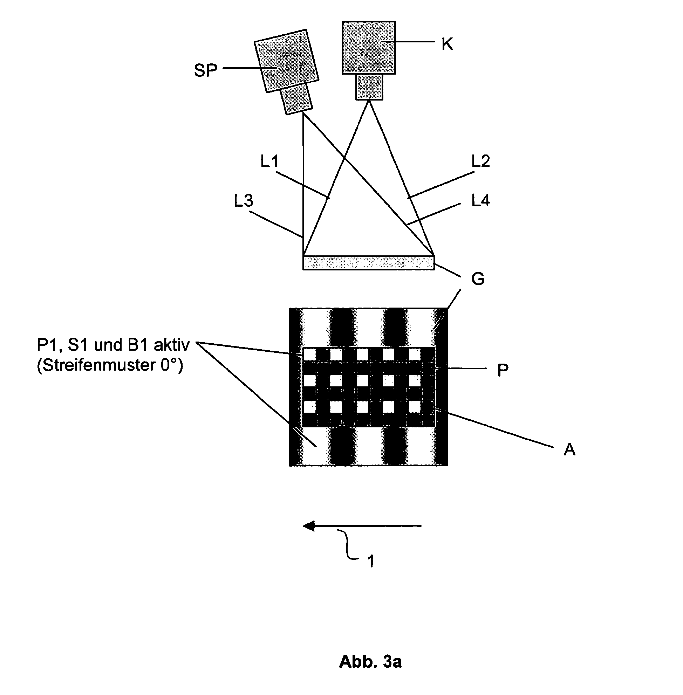

Die Abbildungen 3a bis 3d zeigen die Anwendung auf das Verfahren der Streifenprojektion mit vier verschiedenen Beleuchtungssituationen, die durch einen Streifenprojektor erzeugt werden, der ein Streifenmuster auf den Prüfgegenstand G projiziert. Im oberen Teil der Abbildungen ist wiederum eine Seitenansicht des Aufbaus dargestellt. Dabei ist eine Kamera K senkrecht auf einen Prüfgegenstand G ausgerichtet, und das Blickfeld der Kamera K ist durch die Linien L1 und L2 angedeutet. Links neben der Kamera K ist der Streifenprojektor angedeutet. Das Projektionsfeld des Streifenprojektors ist dabei durch die Linien L3 und L4 angedeutet. Der Streifenprojektor ist unter einem Winkel ungleich 90° gegenüber dem Prüfgegenstand G angeordnet.

Im unteren Teil der Abbildungen 3a bis 3d ist jeweils eine Draufsicht auf den Aufbau dargestellt. Die Kamera K sowie der Streifenprojektor sind hier nicht wiedergegeben, lediglich das Sichtfeld der Kamera in Form eines Pixelmusterausschnitts A eines Kamerachips C sowie das vom Streifenprojektor erzeugte Streifenmuster sind teilweise auf den Prüfgegenstand G projiziert worden, um die Synchronisierung der Beleuchtungssituationen Bn mit dem Kamerachip C zu verdeutlichen. Der Pixelausschnitt A des Kamerachips C weist einzelne Pixel P auf. Die hellen Karos stellen die Pixel P einer Pixelgruppe Pn dar, die durch einen Shutter Sn aktiviert, das heißt lichtempfindlich geschaltet sind.

Die hier gezeigten sinusförmigen Streifenmuster (andere Formen sind möglich) entstehen aus einem Ursprungsmuster durch Phasenverschieben um 0°, 90°, 180° und 270°. Wie durch den Pfeil 1 angedeutet, wandert das Muster bei einer Phasenverschiebung um einen bestimmten Winkel nach links, das heißt die hellen Streifen verschieben sich.

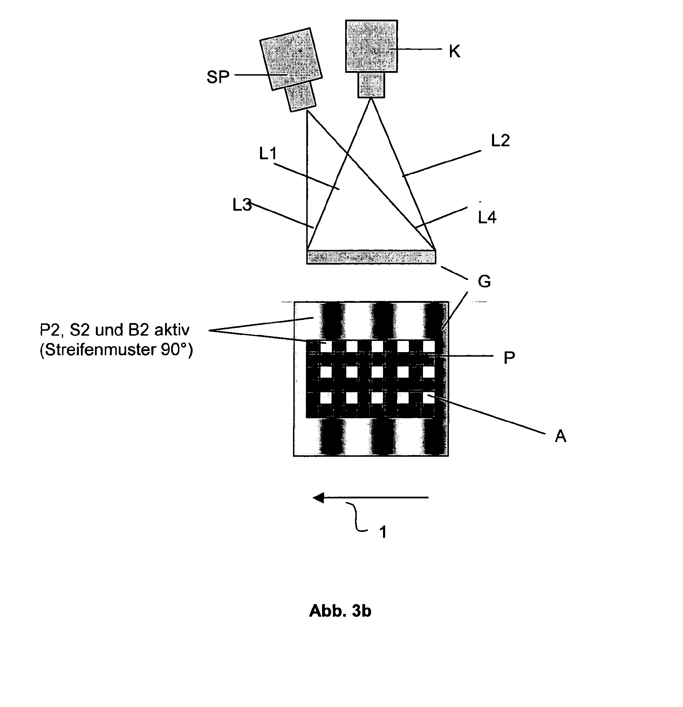

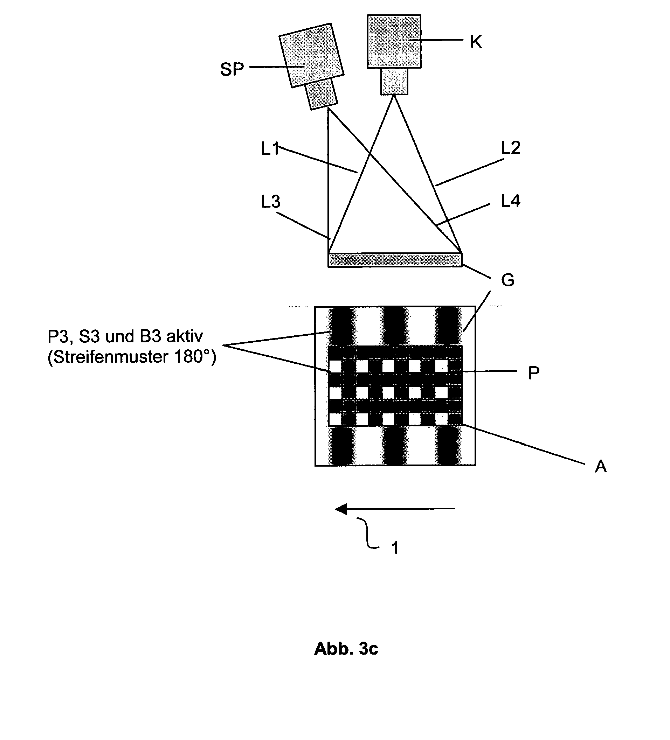

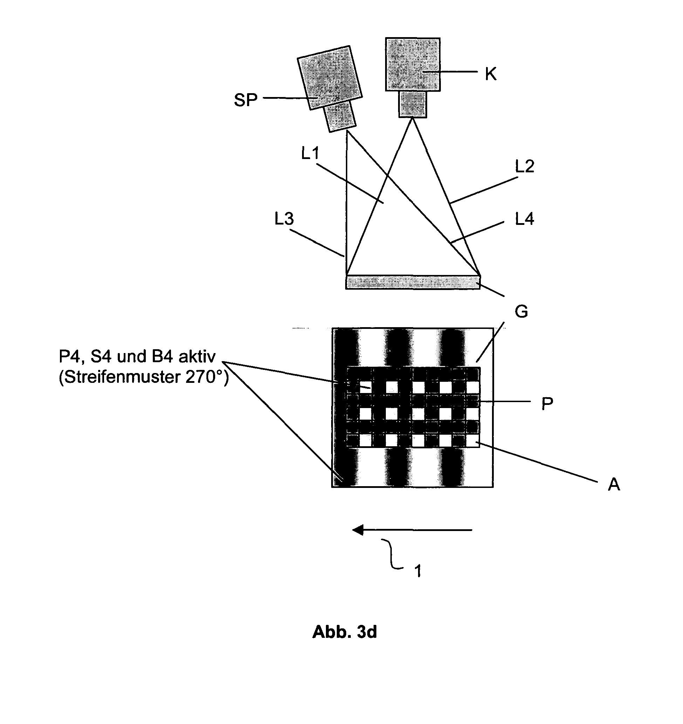

In Abbildung 3a ist ein Streifenmuster in der Phasenlage 0° dargestellt, das auf einen Prüfgegenstand G projiziert wird. Die Pixelgruppe P1 und der Shutter S1 sind dabei aktiv. Bei einer Phasenverschiebung um 90° wird die Pixelgruppe P2 über den Shutter S2 lichtempfindlich geschaltet, wie in Abbildung 3b dargestellt ist. Für Phasenverschiebungen um 180°und 270° gilt Entsprechendes für die Pixelgruppen P3 und P4, wie in den Abbildungen 3c und 3d gezeigt wird. Jede Pixelgruppe nimmt also durch die Verschiebung des Streifenmusters eine andere Beleuchtungssituation auf.

Es sind auch Streifenmuster mit anderer Streifenperiode denkbar, hierfür sind dann eine größere Anzahl von Pixelgruppen sinnvoll.

Weitere Anwendungen beispielsweise auf die Verfahren der Interferometrie, Weißlichtinterferometrie und andere Verfahren der optischen Formerfassung sind denkbar.

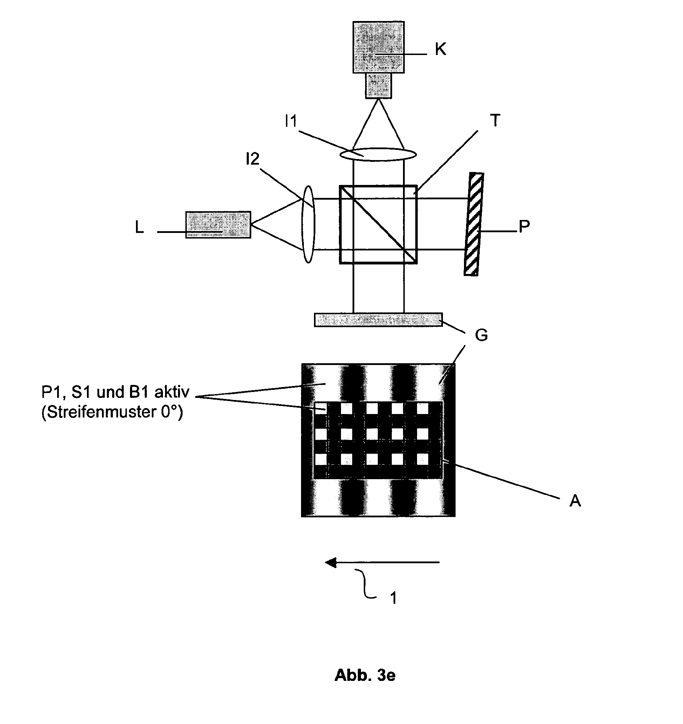

Abbildung 3e zeigt die Anwendung des Verfahrens auf die Laserinterferometrie. Die Anordnung weist einen Laser L, einen Strahlteiler T (halbdurchlässiger Spiegel), einen feststehenden Spiegel P, einen Prüfgegenstand G und eine Kamera K auf, außerdem zwei Linsen I1 und I2. Der vom Laser L ausgesandte Strahl einer bestimmten Wellenlänge, wird einerseits durch den Strahlteiler T auf die Oberfläche des Prüfgegenstands G und andererseits auf den Spiegel P abgelenkt. Von der Oberfläche des Prüfgegenstands G wird der Strahl reflektiert und trifft wieder auf den Strahlteiler. Der auf den Spiegel P auftreffende Strahl wird ebenfalls zurück zum Strahlteiler reflektiert. Im Strahlteiler treffen die beiden Strahlen wieder aufeinander und überlagern sich. Die Kamera K ist so ausgerichtet, dass das überlagerte Licht auf sie trifft. Durch die unterschiedlich langen Wege, die das Licht zum Prüfgegenstand G und zum feststehenden Spiegel P zurücklegt, ergibt sich bei einem Unterschied der Lichtwege von 0, 1, 2, 3, 4, ... mal die Wellenlänge des Lasers, bei der Überlagerung (Interferenz) im Strahlteiler Helligkeit (konstruktive Interferenz) und bei einem Unterschied von 0.5, 1.5, 2.5, ...mal die Wellenlänge des Lasers Dunkelheit (destruktive Interferenz). Aus der Verteilung von Helligkeit und Dunkelheit (Interefernzstreifen) kann man auf die Form des Prüfgegenstands G schließen.

Im Folgenden bezeichnet eine Verschiebung in x-Richtung eine horizontale Verschiebung und eine Verschiebung in y-Richtung eine vertikale Verschiebung bezogen auf die Bildebene.

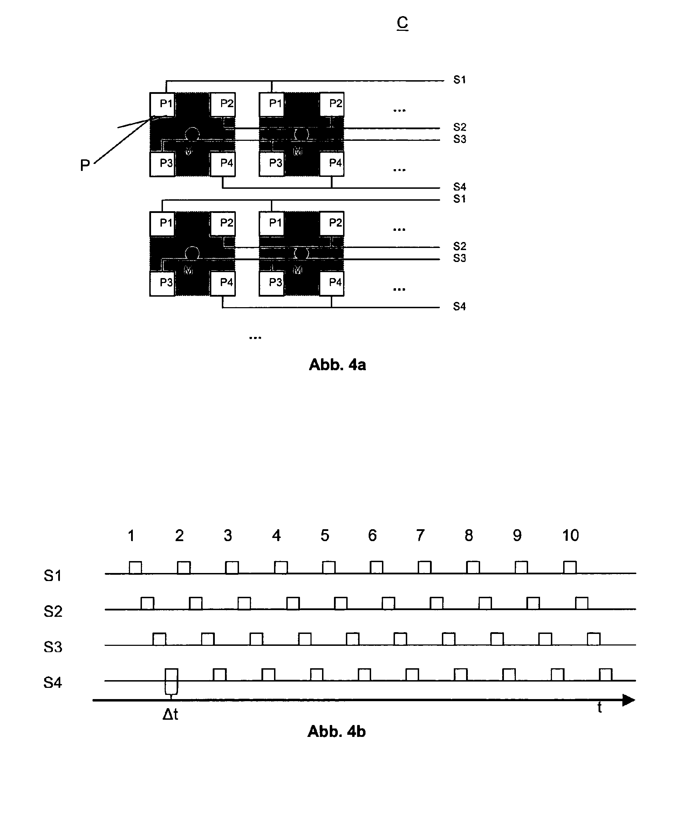

Abbildung 4a zeigt einen schematischen Ausschnitt eines Kamerachips C mit vier Pixelgruppen P1 bis P4. In der Abbildung sind grau hinterlegte Bereiche erkennbar, diese dienen lediglich der Veranschaulichung und haben keinen technischen Effekt. Je ein Pixel P jeder Pixelgruppe Pn befindet sich in einem solchen grau hinterlegten Bereich. In dem grauen Bereich links oben befinden sich die Pixel P1 bis P4. Auch im grauen Bereich rechts oben, links unten und rechts unten sind Pixel P1 bis P4 vorgesehen. Eine erste Pixelgruppe umfasst alle Pixel P1 aller grauen Bereiche, eine zweite Pixelgruppe alle Pixel P2 aller grauen Bereiche und so weiter. Alle Pixel P einer Pixelgruppe P1 bis P4 werden gleichzeitig über einen Shutter S1 bis S4 angesteuert. Wie aus Abbildung 4a ersichtlich ist, variiert der Ort der vier verschiedenen Pixelgruppen P1 bis P4 leicht von Pixelgruppe zu Pixelgruppe. Beispielsweise ist Pixelgruppe P2 um einen Pixelabstand Δx in x-Richtung gegenüber Pixelgruppe P1 verschoben. Entsprechend sind die Pixelgruppe P3 um einen Pixelabstand Δy in y-Richtung und Pixelgruppe P4 um einen Pixelabstand Δx in x sowie um einen Pixelabstand Δy in y-Richtung gegenüber der Pixelgruppe P1 verschoben. Wünschenswert ist es allerdings, alle vier von den Pixelgruppen P1 bis P4 erfassten Bilder in einem gemeinsamen Pixelraster anzugeben. Als Bezugspunkt bietet sich der Mittelpunkt M von benachbarten Pixeln P, also von Pixeln eines grau hinterlegten Bereichs, an.

Alternativ kann auch ein anderer Bezugspunkt gewählt werden, z. B. der Ort der Pixel P aus der Gruppe P1 oder P2 etc. Durch Interpolation von den auch als Grauwerte bezeichneten Messwerten der Pixel P aus Pixelgruppe P1 werden Werte an Bezugspunkten, beispielsweise am Bezugspunkt M, errechnet, genauso für alle weiteren Pixelgruppen P2 bis P4. Die Interpolation ist auch für eine andere Anzahl von Pixelgruppen möglich. Aus Zeitgründen kann diese Berechnung vorteilhaft auf einer hierfür ausgelegten Hardware der Kamera ausgeführt werden, alternativ auf einem angeschlossenen Rechner.

Alternativ ist es auch möglich, andere Zeitmuster vorzugeben. Abbildung 4b zeigt den zeitlichen Verlauf von vier Shuttern S1 bis S4. Die Shuttersignale, welche die einzelnen Pixelgruppen Pn lichtempfindlich schalten, sind als Rechteckimpulse über ein bestimmtes Zeitintervall Δt dargestellt. Die Zeitachse ist mit t gekennzeichnet. Beispielsweise werden zunächst die Pixelgruppen P1 bis P4 nacheinander für Δt = 2 Mikrosekunden belichtet und dieser Vorgang zehnmal wiederholt, bis eine Gesamtbelichtungszeit von 20 Mikrosekunden erreicht ist. Damit liegt der zeitliche Versatz der Belichtungen von aufeinander folgenden Pixelgruppen bei nur 2 Mikrosekunden. Die Wahl der Zeiten und die Anzahl der Wiederholungen stellt lediglich ein Beispiel dar und kann fast beliebig variiert werden. Beispielsweise sind auch sinusförmige oder anders modulierte Shuttersignale einsetztbar. Der Vorteil von geringeren Belichtungszeiten ist, dass sich der Prüfgegenstand weniger weit fort bewegt hat zwischen der Belichtung der einzelnen Pixelgruppen Pn. Die Gesamtbelichtungszeit jeder Pixelgruppe Pn ist zwar die gleiche, die örtliche Verschmierung zwischen den Pixelgruppen Pn durch den bewegten Prüfgegenstand G ist jedoch geringer.

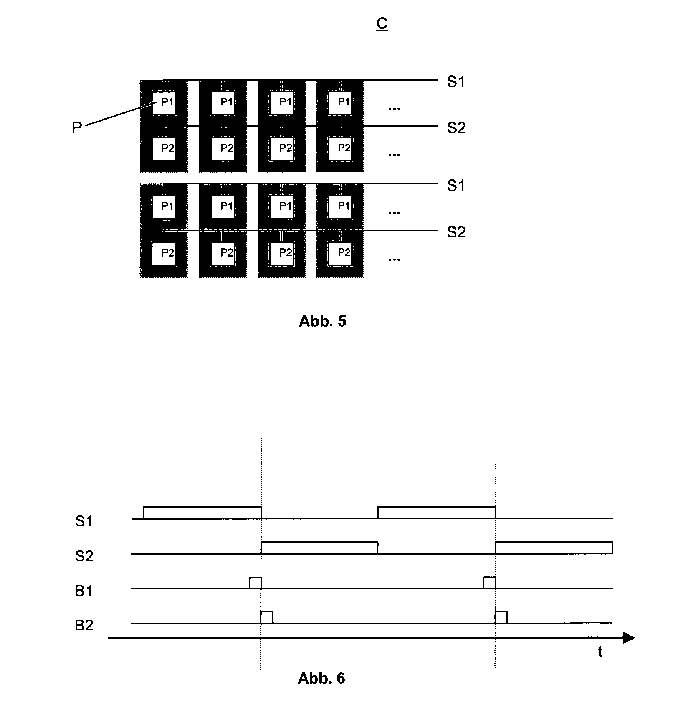

Alternativ kann auch eine kleinere oder größere Zahl von Pixelgruppen gewählt werden. Abbildung 5 zeigt einen schematischen Ausschnitt eines Kamerachips C mit einer Ausgestaltung des einfachsten Falls, nämlich die Verwendung von nur zwei Pixelgruppen P1 und P2. Jeweils ein Pixel P einer Pixelgruppe P1 ist wiederum benachbart mit einem Pixel P der anderen Pixelgruppe P2, wie in Abbildung 5 wiederum durch die grauhinterlegten Bereiche angedeutet ist. Die Verbindungslinien verdeutlichen, dass jede Pixelgruppe P1 und P2 durch zwei verschiedene Shutter S1 und S2 angesteuert wird. Durch die Ähnlichkeit zu Kamerachips im Interlaced-Modus (Zeilensprung) könnte ein solcher Interlaced-Modus Kamerachip durch geringe Änderungen erfindungsgemäß modifiziert werden. Der Unterschied zum Interlaced-Modus besteht darin, dass dort gerade und ungerade Zeilen mit einem Zeitunterschied belichtet werden, welcher der Bildwiederholfrequenz oder der Hälfte hiervon entspricht. Das heißt, dass derjenige Shutter, der beispielsweise die ungeraden Zeilen ansteuert, erst dann aktiv wird, wenn das aufgenommene Bild der geraden Zeilen ausgelesen ist. Umgekehrt wird derjenige Shutter, der die geraden Zeilen ansteuert erst dann aktiv, wenn das Bild der ungeraden Zeilen ausgelesen wurde. Der Kamerachip C muss also dahingehend modifiziert werden, dass die Shutterzeit nicht die volle Bildperiode beträgt, also Belichten und Auslesen abwartet, sondern nur die Belichtungszeit, und gleich nach der Belichtung der geraden oder ungeraden Zeilen, der entsprechend andere Shutter die jeweils anderen Zeilen lichtempfindlich schaltet. Der Zeitunterschied beträgt also nur die Dauer der Shutterzeit, was leicht einen Faktor Tausend kürzer sein kann als die gesamte Bildperiode mit Belichten und Auslesen.

Alternativ kann auch ein bestehender Interlaced-Kamerachip C verwendet werden in Kombination mit einer speziellen zeitlichen Steuerung der Beleuchtung. Abbildung 6 zeigt einen beispielhaften Verlauf der Shuttersignale S1 und S2, die die Pixelgruppen P1 und P2 lichtempfindlich schalten, und der korrespondierenden Aktivierung der Beleuchtungen B1 und B2 über der Zeit t. Die Shuttersignale sowie die aktiven Beleuchtungen sind als Rechteckimpulse dargestellt. Der Maßstab der Zeitachse t entspricht nicht dem Maßstab der anderen mit Zeitachse versehenen Abbildungen. Die Beleuchtung B1 wird beispielsweise kurz vor Ende der Shutterzeit der Pixelgruppe P1 für eine kurze Zeit aktiviert. Sobald die Belichtung der Pixelgruppe P2 beginnt, wird die Beleuchtung B1 deaktiviert und Beleuchtung B2 ebenfalls für eine kurze Zeit aktiviert. Die Zeit, in der die Beleuchtungen aktiviert sind, kann vorzugsweise sehr viel kürzer sein als es der Bildperiode, also der Summe von Beleuchtungszeit und Auslesezeit, entspricht, beispielsweise von einigen Zig Mikrosekunden bis zu einigen Millisekunden. Ausschlaggebend hierbei ist, dass die unterschiedlichen Beleuchtungssituationen B1 und B2 direkt nacheinander aufgenommen werden. Dabei nimmt die Pixelgruppe P1 den Prüfgegenstand G unter Beleuchtungssituation B1 und die Pixelgruppe P2 den Prüfgegenstand G unter Beleuchtungssituation B2 auf. Nachdem beide Pixelgruppen P1 und P2 hintereinander belichtet wurden, kann der Kamerachip C ausgelesen werden.

Alternativ kann bei einem neuen Kamerachipdesign wie oben bereits erwähnt auch eine größere Zahl von Pixelgruppen P1 bis Pn gebildet werden. Es bietet sich besonders die Anzahl 2 x 2 = 4 wie in Abbildung 1 a dargestellt, 3 x 3 = 9, 4 x 4 = 16 usw. an, da jeweils benachbarte Pixel P in einer quadratischen Fläche zusammengefasst werden können und in x-Richtung und y-Richtung jeweils gleiche Interpolationsabstände entstehen, was aus Symmetriegründen die Berechnung der Bezugspunkte vereinfacht.

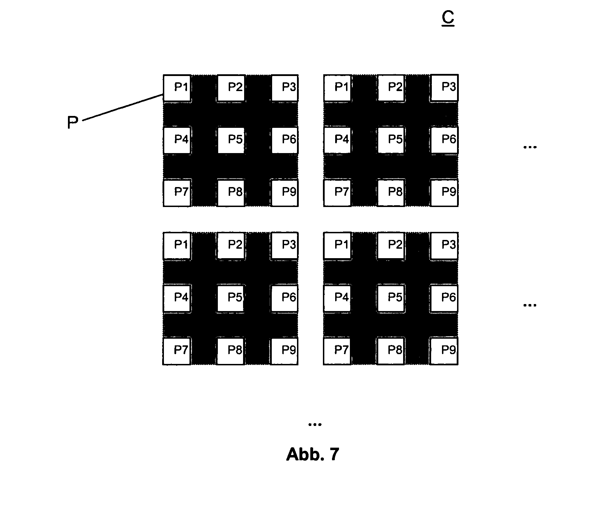

Abbildung 7 zeigt einen Ausschnitt eines Kamerachips C mit 3 x 3 Pixelgruppen P1 bis P9. Wiederum sind benachbarte Pixel P unterschiedlicher Pixelgruppen P1 bis P9 grau hinterlegt. Die Zuleitungen der Shutter S1 bis S9 wurde aus Gründen der Übersichtlichkeit nicht gezeichnet.

Alternativ kann es für eine einfachere Herstellung des Kamerachips C auch sinnvoll sein, Pixelgruppen mit eigenem Shuttersignal nicht quadratisch anzuordnen, sondern in Gruppen von 2 x 1, 3 x 1, 4 x 1, usw. Pixeln, also zeilenweise. Der Vorteil dabei liegt darin, dass jeder Zeile des Kamerachips C genau ein Shuttersignal zugeordnet wird und das Verbindungslayout des Kamerachips C sich einfach gestaltet. Eine solche Anordnung für 2 x 1 Pixelgruppen P1 und P2 ist in Abbildung 5 dargestellt. Für 3 x 1, 4 x 1 usw. Pixelgruppen ist die Anordnung entsprechend zu erweitern.

Eine weitere Alternative besteht in einer rechteckigen Anordnung der Pixelgruppen Pn, beispielsweise 2 x 3, 3 x 4 oder andere Seitenverhältnisse. Denkbar ist auch die Anordnung von acht Pixelgruppen P1 bis P8 in einem 3 x 3 Raster, wobei ein Rasterpunkt, beispielsweise der mittlere, ungenutzt bleibt, dort könnte dann beispielsweise ein Bezugspunkt angeordnet sein, an den die umliegenden Pixel P einzelner Pixelgruppen P1 bis P8 interpoliert werden. Ganz allgemein sind weitere, auch asymmetrische Anordnungen denkbar.

Die genannten Varianten gehen mehrheitlich davon aus, dass ein neuartiges Kamerachipdesign erstellt bzw. ein bestehendes Design modifiziert wird. Einzige Ausnahme bildet die Verwendung eines Interlaced-Kamerachips C, bei dem gerade und ungerade Zeilen schon zu unterschiedlichen Zeitpunkten belichtet werden. Die Beleuchtungsaktivierung muss dann nur noch entsprechend angepasst werden, wie in Abbildung 6 dargestellt ist.

Im Folgenden sollen weitere Lösungsvarianten vorgestellt werden, die keine Veränderungen im Kamerachipdesign nötig machen.

### Verfahren für Matrixkamera oder Zeilenkamera mit mehreren Zeilen

Mit einem üblichen flächigen Matrix-Kamerachip, der mit nur einem Shutter S1 zusammenwirkt, sollen mehrere Kamerabilder (Anzahl n) in sehr dichter zeitlicher Abfolge aufgenommen werden, sprich sehr viel schneller als einige Zig Millisekunden. Dies scheint zunächst ein Widerspruch in sich zu sein, da solch kurze Bildperioden, beziehungsweise die daraus resultierenden großen Bildwiederholfrequenzen bei einem herkömmlichen Benutzungsverfahren eines MatrixKamerachips nicht erreicht werden können.

Erfindungsgemäß wird der zu prüfende Gegenstand zunächst mit einer ersten Beleuchtung B1 von insgesamt n Beleuchtungen erhellt, der gesamte Kamerachip C mit Hilfe des Shutters S1 belichtet und lediglich ein Teilbereich des Kamerachips C ausgelesen, insbesondere eine bestimmte Anzahl von Zeilen Z1 bis Zn oder Spalten des Kamerachips C oder Teile hiervon. Im Weiteren wird nur noch von Zeilen gesprochen, gleiches gilt entsprechend immer auch für Spalten und Teile von Zeilen oder Spalten. Es werden eine oder mehrere Zeilen ausgelesen, vorzugsweise so viele wie Bilder mit unterschiedlicher Beleuchtung aufzunehmen sind oder ein Vielfaches davon. Als Sonderfall können eine oder auch mehrere Beleuchtungen dunkel sein und/oder können ein oder mehrere Beleuchtungen identisch sein.

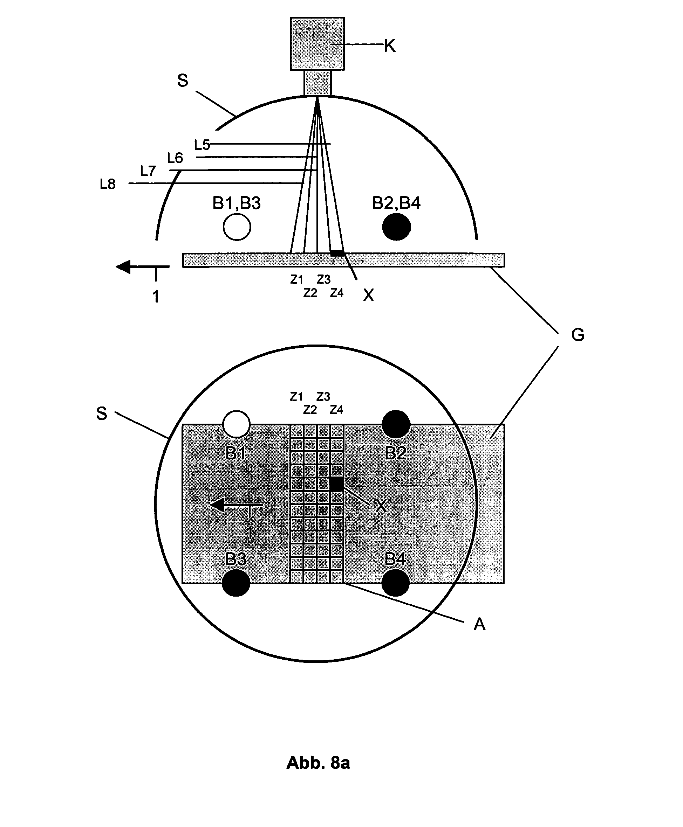

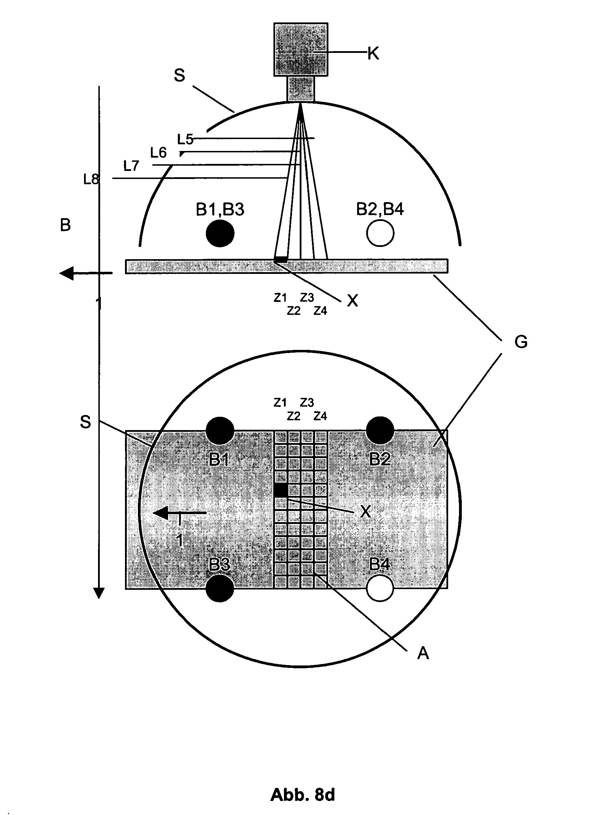

Die Abbildungen 8a bis 8d zeigen im oberen Teil eine Seitenansicht eines Aufbaus für die photometrischen Deflektometrie. Gleiche Teile sind mit gleichen Bezugsziffern versehen, sodass insofern auf die vorherigen Abbildungen verwiesen wird. Wiederum stellen die hellen Kreise die aktivierten Beleuchtungen, die dunklen Kreise die inaktiven Beleuchtungen dar. Auch erkennbar ist der Prüfgegenstand G mit einem Merkmal X, das sich synchron mit dem Prüfgegenstand G in Richtung des Pfeils 1 bewegt. Die vier Bereiche L5 bis L8 kennzeichnen das Blickfeld der Kamera K auf den Prüfgegenstand G, dabei steht jeweils ein Bereich L5 bis L8 für eine Zeile Z1 bis Z4 des Kamerachips C.

Der untere Teil der Abbildungen 8a bis 8d zeigt eine Draufsicht auf den Aufbau. Die Kamera K ist nicht dargestellt, lediglich ein Pixelrasterausschnitt A des Kamerachips C ist teilweise auf den Prüfgegenstand G projiziert worden, um zu verdeutlichen, wie der Kamerachip C mit den Beleuchtungen B1 bis B4 synchronisiert ist.

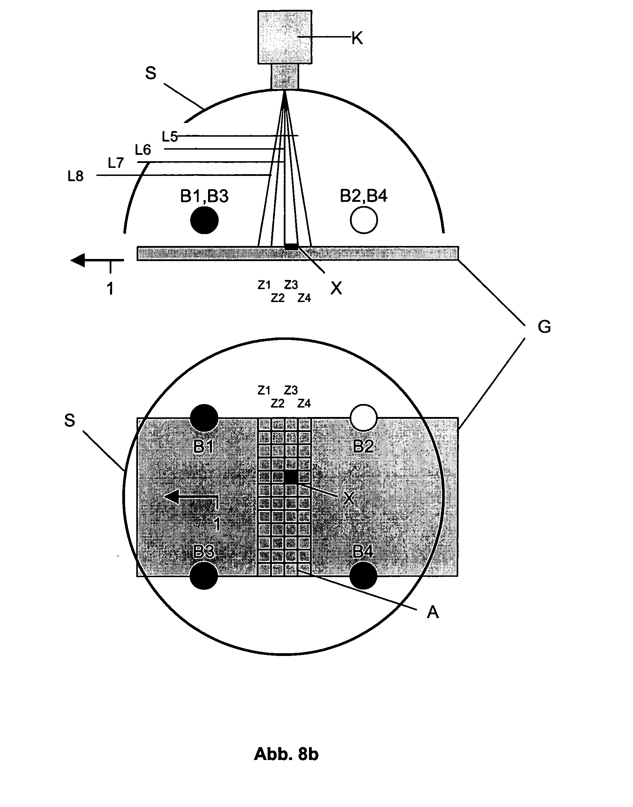

Als erstes wird, wie in Abbildung 8a dargestellt, die Beleuchtung B1 aktiviert und die Zeilen Z1 bis Z4 werden belichtet und ausgelesen. Ein beispielhaft gewähltes Merkmal X des Prüfgegenstandes G befindet sich zu diesem Zeitpunkt der Bewegung im Bereich der Zeile Z4. Danach findet ein Wechsel zu einer zweiten Beleuchtung B2 statt, und es wird wieder ein Teilbereich des Kamerachips C ausgelesen, vorzugsweise derselbe Bereich, der die vorhergehende Beleuchtungssituation mit B1 aufgenommen hat. Der Prüfgegenstand G und mit ihm das Merkmal X, haben sich in der Zwischenzeit um einen Abstand weiterbewegt. Das Merkmal X befindet sich nun beispielsweise im Bereich der Zeile Z3, wie in Abbildung 8b dargestellt ist.

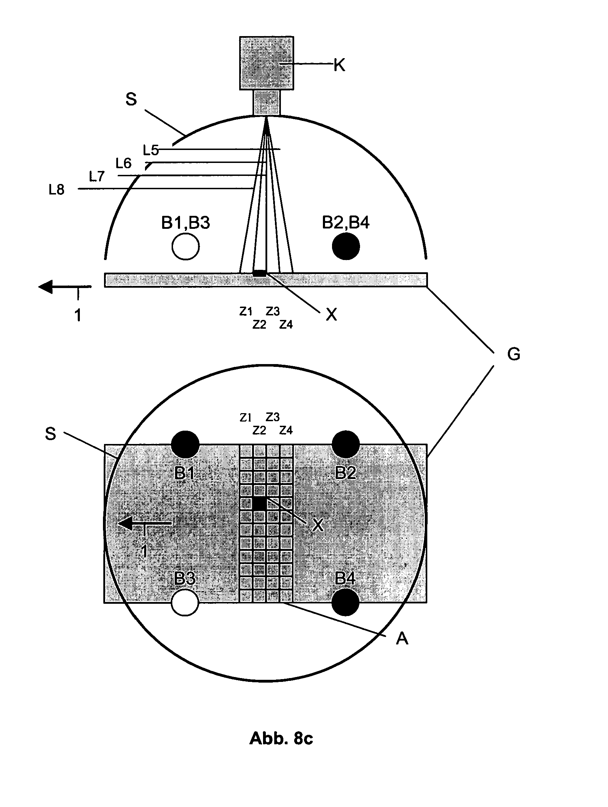

Dieser Ablauf wiederholt sich, wie in den Abbildungen 8c bis 8d dargestellt, bis eine Anzahl von n Beleuchtungen erreicht ist. Danach schließt sich die nächste Serie von n Beleuchtungen und Ausleseprozessen an, bis eine gewünschte Anzahl von Wiederholungen erreicht ist. Dabei befindet sich der Prüfgegenstand G in Bewegung in Bezug auf die Kamera, sodass nach und nach die Oberfläche des Gegenstandes oder Teile hiervon überstrichen werden. Diese Bewegung kann in unterschiedlicher Form ausgeführt werden, beispielsweise einer geradlinigen Bewegung mit konstanter Geschwindigkeit und Richtung. Für rotationssymmetrische Gegenstände, deren Mantelfläche geprüft werden soll, bietet sich eine Rotation um die Symmetrieachse mit konstanter Drehgeschwindigkeit an.

Eine weitere, hier nicht dargestellte Variante, ist eine Bewegung des Prüfgegenstands G, bei der zusätzlich zu einer Rotation ein gleichzeitiger Vorschub des Prüfgegenstands G entlang der Rotationsachse stattfindet. Ein Punkt auf der Oberfläche des Prüfgegenstands G beschreibt also eine schraubenlinienförmige Bahn. Die Zeilen des Kamerachips C müssen dabei derart ausgerichtet sein, dass sie senkrecht zu dieser Schraubenlinie stehen. Vorteil dieser Bewegung ist, dass auch lange zylindrische Bauteile innerhalb mehrerer Umdrehungen vollständig erfasst werden können. Es können auch mehrere einzelne Prüflinge aneinander gereiht werden und so kontinuierlich geprüft werden.

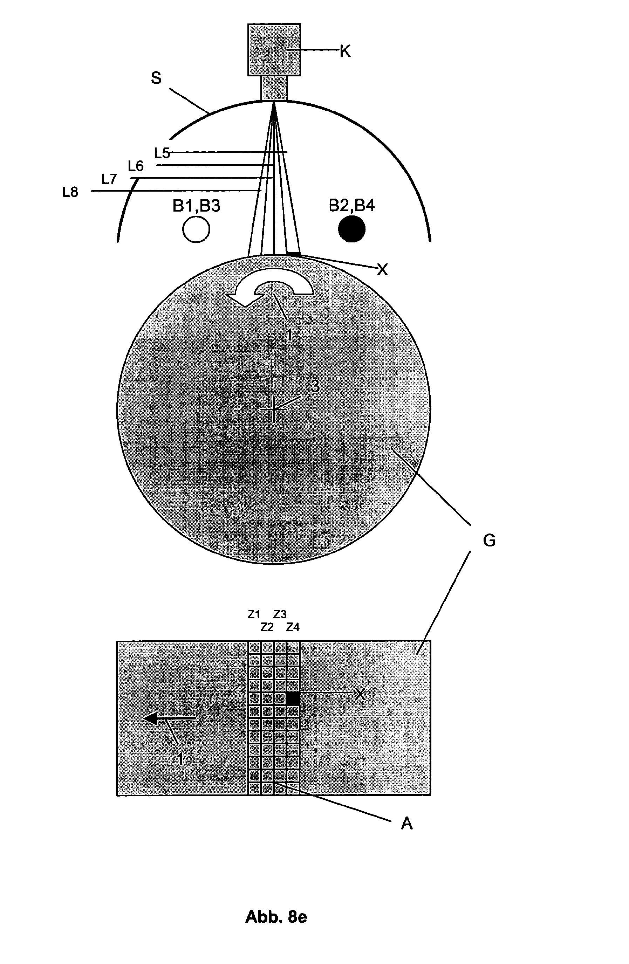

Abbildung 8e zeigt beispielhaft den Aufbau für das Photometrische Deflektometrieverfahren, jedoch ist hier im Gegensatz zu den Abbildungen 8a bis 8d ein in Richtung des Pfeils 1 rotierender Prüfgegenstand G abgebildet. Wiederum deuten die Kegel L5 bis L8 das Blickfeld der Kamera an, bzw. die Aufnahmeorte der einzelnen Zeilen Z1 bis Z4 des Kamerachips C auf dem Prüfgegenstand G.

Der Prüfgegenstand G bewegt sich von Aufnahme zu Aufnahme um eine bestimmte Strecke oder einen bestimmten Drehwinkel weiter. Die Geschwindigkeit, Drehgeschwindigkeit, der Aufnahmezeitpunkt und/oder Auslesezeitpunkt werden vorteilhaft so gewählt, dass sich der Prüfgegenstand G gegenüber der Kamera K von Aufnahme zu Aufnahme um einen Pixelabstand oder ein ganzzahliges Vielfaches hiervon weiterbewegt. Dies kann beispielsweise durch einen mit der Bewegung gekoppelten Geber, insbesondere einen Drehgeber, erreicht werden, der den Aufnahmezeitpunkt bzw. Auslesezeitpunkt entsprechend vorgibt, sodass Toleranzen des Motors keine negativen Auswirkungen haben.

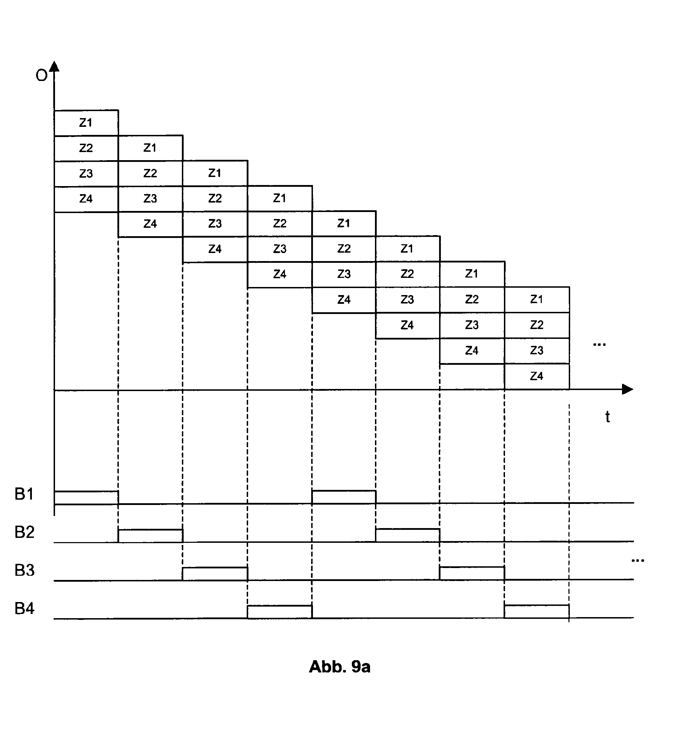

Im oberen Teil der Abbildung 9a ist der Ort des Prüfgegenstandes G, der von den Zeilen Z1 bis Z4 erfasst wird (Hochachse), als Funktion der Zeit dargestellt (Rechtsachse).

Im unteren Teil der Abbildung 9a ist dargestellt, welche Beleuchtung B1 bis B4 jeweils aktiv ist. Die Beleuchtungen werden nacheinander aktiviert, die Zeilen Z1 bis Z4 sind dabei gleichzeitig lichtempfindlich geschaltet. Nach jedem Belichtungsvorgang, werden die Zeilen Z1 bis Z4 ausgelesen.

Die Zeilen Z1 bis Zn nehmen nach und nach im Verlauf der Zeit verschiedene Orte bezüglich des Prüfgegenstandes G auf. Die Zahl der Zeilen und die Zahl der Beleuchtungen wurde beispielhaft zu n=4 gewählt. Ebenso sind andere Anzahlen n möglich.

Die ausgelesenen Bildbereiche, hier die der Zeilen Z1 bis Z4, werden an eine Recheneinheit R übertragen und dort in einem Speicher abgelegt. Dabei erfolgt die Ablage nach einem bestimmten Muster.

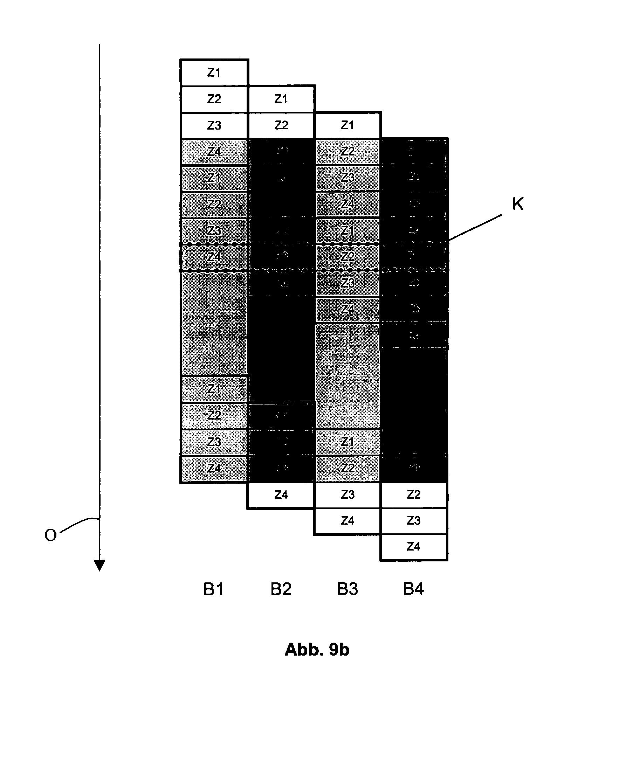

Abbildung 9b zeigt eine schematische Darstellung eines solchen Speichermusters, das in einem stark abstrahiert dargestellten Speicherbereich angeordnet ist. Die einzelnen Kästchen Z1 bis Z4 stellen dabei die Messwerte dar, die die Zeilen Z1 bis Z4 des Kamerachips C von dem jeweiligen Oberflächenausschnitt des Prüfgegenstandes G mit einer bestimmten Beleuchtungssituation aufgenommen haben. Die Reihenfolge der Messwertspeicherung richtet sich nach den Beleuchtungen. Zunächst werden also die Zeilen Z1 bis Z4 mit B1 beleuchtet und im Speicher abgelegt, danach werden die Zeilen Z1 bis Z4 mit der Beleuchtung B₂ beleuchtet und um eine Zeile nach unten versetzt im Speicher angeordnet. Dieser Vorgang wiederholt sich für alle vier Beleuchtungen. Danach beginnt der Speichervorgang von neuem im Anschluss an die erste Speicherung. Dabei ergibt jeweils ein grau unterlegter Speicherbereich ein Bild, das mit der Beleuchtung B1, B2, B3 bzw. B4 aufgenommen wurde. Die aufgenommene Oberfläche des Prüfgegenstands G verläuft dabei in Richtung des Pfeils O. In der Abbildung ist unter jeder Spalte die jeweilige Beleuchtung B1 bis B4 angegeben, mit der die Prüfgegenstandsoberfläche beleuchtet wurde. Die Zeilen Z1 bis Z4 sind im Speicher derart abgelegt, dass das gleiche Merkmal X der Oberfläche des Prüfgegenstands G in einer horizontalen Reihe angeordnet ist. Dabei ergeben sich sogenannte korrespondierende Zeilen, die dem gleichen Ort der Prüfgegenstandsoberfläche mit unterschiedlichen Beleuchtungssituationen entsprechen. Ein Beispiel für korrespondierende Zeilen bei Beleuchtung B1 bis B4 ist durch K in der Abbildung gekennzeichnet. Korrespondierend bedeutet für dieses Beispiel, dass die Zeile Z4 unter Beleuchtung B1 denselben Bereich des Prüfgegenstandes G, beispielsweise das Merkmal X, darstellt, wie Z3 unter Beleuchtung B2, Z2 unter B3 sowie Z1 unter B4. Es liegen also pixelgleiche Daten, d.h. Daten der gleichen Oberflächenbereiche für jede Beleuchtung B1 bis B4 vor. Dies ist ein besonderer Vorteil, denn somit ist keine Interpolation von Zwischenwerten notwendig. Dies bedeutet einen geringen Berechnungs- und Zeitaufwand. Darüber hinaus können Fehler, die sich sonst bei einer Interpolation einstellen, vermieden werden. Solche Fehler treten insbesondere bei scharfen Helligkeitsübergängen im Bild auf, Bereichen die oft von größtem Interesse sind.

Die Zeilen, welche mit unterschiedlichen Beleuchtungen aufgenommen wurden, sind in Abb. 9b horizontal nebeneinander angeordnet gezeichnet. Diese zweidimensionale Darstellung dient der Übersicht, so können korrespondierende Zeilen am besten verständlich dargestellt werden. Selbstverständlich können diese Speicherbereiche im Speichermedium auch in abgewandelter Form angeordnet sein. Beispielsweise kann die Anordnung der Zeilen im Speicher auch linear gedacht werden. Im einfachsten Fall werden die Zeilen der Kamera Aufnahme für Aufnahme direkt hintereinander linear im Speicher abgelegt und korrespondierende Zeilen anhand Ihres Abstandes im Speicher zugeordnet. All diese verschiedenen Anordnungen im Speicher sind als äquivalent zur abgebildeten Speicheranordnung zu sehen, solange korrespondierende Speicherbereiche angegeben werden können. Dies gilt auch für nachfolgende Abbildungen, welche den Speicher darstellen.

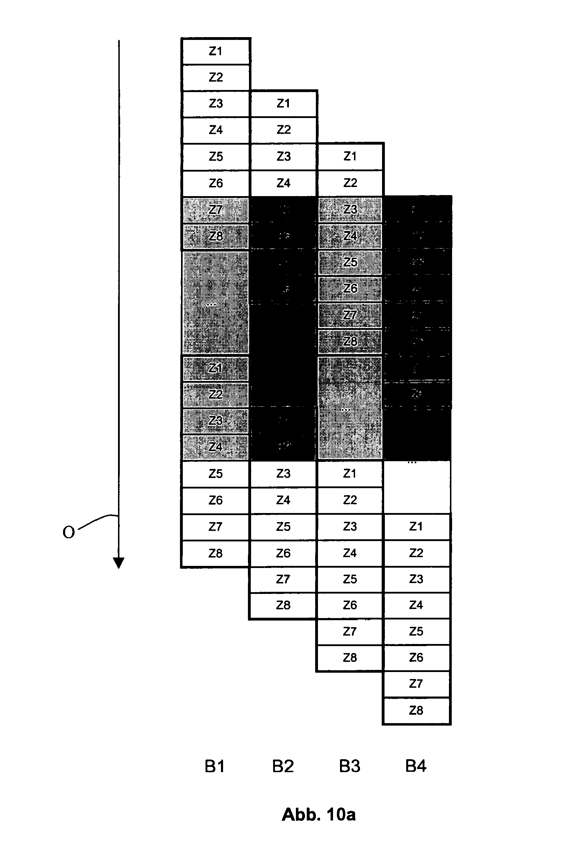

Alternativ zu Abbildung 9a und 9b kann der Versatz ein Vielfaches des Pixelabstandes betragen, beispielsweise das Doppelte. In diesem Fall sind dann jeweils acht Zeilen auszulesen. Die Anordnung im Speicher der Recheneinheit wird dann vorzugsweise wie in Abbildung 10a gewählt. Dort ist ebenfalls eine schematische Darstellung eines Speichermusters dargestellt. Wiederum stellen die einzelnen Kästchen Z1 bis Z8 die Information dar, die die Zeilen Z1 bis Z8 des Kamerachips C von dem jeweiligen Oberflächenausschnitt des Prüfgegenstandes G mit einer bestimmten Beleuchtungssituation aufgenommen haben. Die aufgenommene Oberfläche des Prüfgegenstands G verläuft in Richtung des Pfeils O.

Die Auslesezeiten, die bei diesem Verfahren erreicht werden, liegen typisch um einen Faktor 100 bis 1000 niedriger als beim Auslesen des gesamten Matrixkamerachips dadurch, dass nur Teilbereiche des Matrixkamerachips ausgelesen werden. Der Faktor 100 ergibt sich für den Fall, dass anstelle von 400 Zeilen insgesamt nur 4 ausgelesen werden, der Faktor 1000, wenn anstelle von 2000 Zeilen nur 2 ausgelesen werden. Aus diesem Grund ist die Variante für n=2 äußerst interessant.

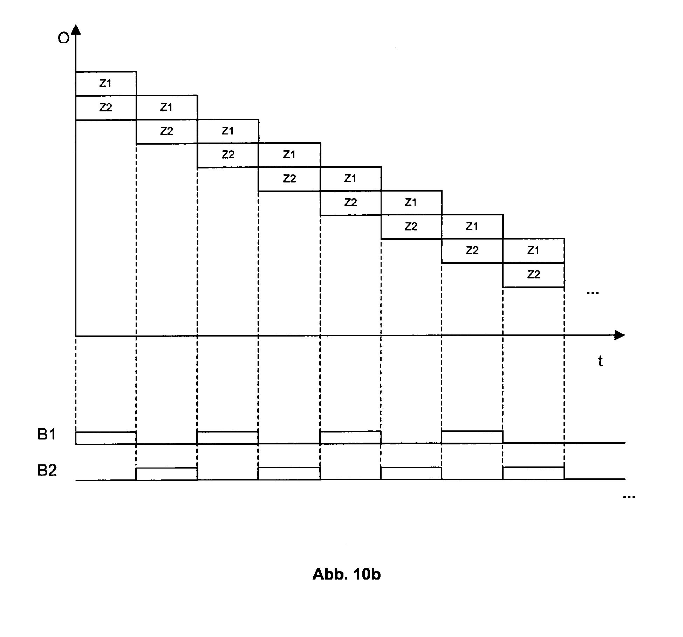

Der obere Teil der Abbildung 10b zeigt den Ort auf der Oberfläche des Prüfgegenstandes G (Hochachse), den zwei Zeilen Z1 und Z2 des Kamerachips C erfassen, als Funktion der Zeit (Rechtsachse).

Der untere Teil der Abbildung 10b zeigt als Rechteckimpulse dargestellt, die Beleuchtungen B1 und B2, die abwechselnd aktiviert werden. Der Prüfgegenstand bewegt sich, wie im oberen Teil der Abbildung 10b ersichtlich ist, um einen Zeilenabstand des Kamerachips C weiter, die Zeilen Z1 und Z2 werden wieder belichtbar geschaltet und die zweite Beleuchtung B2 aktiviert.

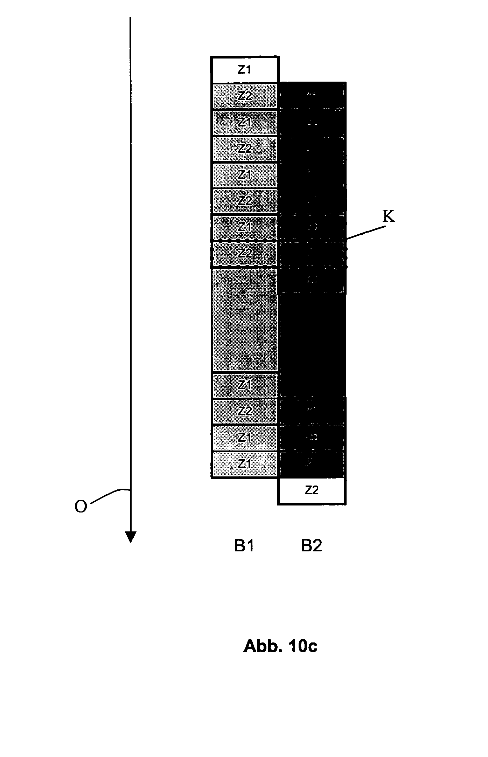

Abbildung 10c zeigt das entsprechende Speichermuster in einem stark schematisierten Speicher, wenn zwei Zeilen Z1 und Z2 verwendet werden. Wiederum sind die Informationen, der Oberfläche des Prüfgegenstands G in Kästchen Z1 und Z2 dargestellt. Die Oberfläche des Prüfgegenstands G bewegt sich wiederum in Richtung des Pfeils O. Eine korrespondierende Zeile K verdeutlicht, dass in einer horizontalen Reihe jeweils gleiche Oberflächenbereiche des Prüfgegenstands G, die mit unterschiedlichen Beleuchtungen B1 und B2 aufgenommen wurden, nebeneinander angeordnet sind.

Weitere Anwendungsbeispiele werden in Abb. 11a bis 14b gezeigt. Abbildung 11a zeigt eine Anwendung des Verfahrens für photometrisches Stereo und eine lineare Bewegung des Prüfgegenstands G. Dieser bewegt sich in Richtung des Pfeils 1. Gegenüber der photometrischen Deflektometrie entfällt hier der Streukörper, und die Beleuchtungen B1 bis B4 sind in einem größeren Abstand zum Prüfgegenstand G angeordnet. Im oberen Teil der Abbildung 11 a ist das Sichtfeld der Kamera K durch die Bereiche L5 bis L8 gekennzeichnet, die einzelne Zeilen des Kamerachips C repräsentieren. Gleiche Teile sind mit gleichen Bezugsziffern versehen, sodass insofern auf die vorangehenden Abbildungen verwiesen wird.

Abbildung 11b zeigt das Verfahren angewendet auf das photometrische Stereo in Kombination mit einer Drehbewegung des Prüfgegenstands G. Dieser rotiert um die Drehachse 3 in Richtung des Pfeils 1.

In Abbildung 12a wird das erfindungsgemäße Verfahren angewandt auf das an sich bekannte Verfahren der Streifenprojektion und eine lineare Bewegung des Prüfgegenstands G.

Im oberen Bereich der Abbildung 12a ist eine Seitenansicht des Aufbaus zu sehen. Das Sichtfeld der Kamera K ist durch die Bereiche L5 bis L8 gekennzeichnet, dabei stellen die einzelnen Bereiche die Sichtfelder der Zeilen Z1 bis Z4 des Kamerachips C dar. Ein Streifenprojektor SP leuchtet einen Bereich des Prüfgegenstandes G mit einem Streifenmuster aus, dieser Bereich ist durch die Linien L3 und L4 gekennzeichnet. Vorzugsweise leuchtet der Streifenprojektor mit einer sinusförmigen Modulation der Bestrahlungsstärke in Abhängigkeit des Ortes auf G. Der Prüfgegenstand G bewegt sich vorzugsweise linear und gleichförmig in Richtung des Pfeils 1.

Im unteren Teil der Abbildung 12a ist eine Draufsicht auf den Aufbau zu sehen. Dabei sind der Prüfgegenstand G, das auf diesen projizierte Streifenmuster sowie eine Projektion des Sichtfeldes der Zeilen Z1 bis Z4 des Kamerachips C wiedergegeben.

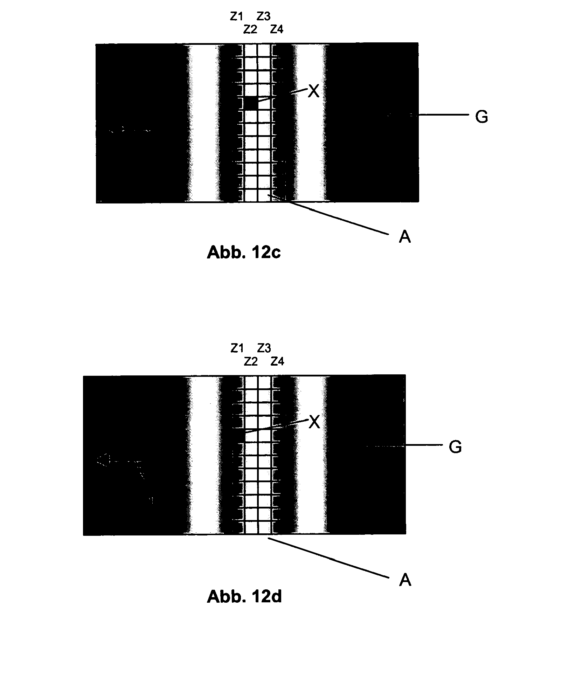

In der Abbildung 12a ist dargestellt, wie sich ein Merkmal X zunächst im Bereich der Zeile Z4 befindet, danach im Bereich der Zeile Z3 gemäß Abbildung 12b, danach im Bereich der Zeile Z2 und im Bereich der Zeile Z1 wie in den Abbildungen 12c und 12d dargestellt ist.

Im Fall der Streifenprojektion kann das Streifenmuster von Zeitabschnitt zu Zeitabschnitt in der Phasenlage und im Streifenabstand variiert werden (das entspricht den unterschiedlichen Beleuchtungen B1 bis Bn), dies ist aber vorteilhaft nicht notwendig. Bereits die Bewegung des Prüfgegenstandes sorgt dafür, dass ein Merkmal X zu unterschiedlichen Zeitpunkten in unterschiedlichen Bereichen des Streifenmusters (in unterschiedlichen Phasenlagen des Streifenmusters) zu liegen kommt. Vorteilhaft wird der Streifenabstand so gewählt, dass nach n Bewegungsschritten genau eine Streifenperiode, also ein heller und ein dunkler Streifen, überstrichen wird. Im vorliegenden Beispiel ist n=4. Damit wird das Merkmal X in Zeile Z4 mit der Phasenlage 0° (B1), in Z3 mit der Phasenlage 90° (B2), in Z2 mit 180° (B3) und Z1 mit 270° (B4) aufgenommen. Die Bewegung erzeugt also automatisch ein geeignetes Phasenschieben, das bei anderen Verfahren immer erst aufwändig erzeugt werden muss.

Der besondere Vorteil des erfindungsgemäßen Verfahrens liegt also darin, dass ein äußerst einfacher und kostengünstiger Projektor mit einem statischen, unveränderlichen Streifenmuster und hohem Streifenkontrast verwendet werden kann. In diesem Fall ist das zeitliche Nacheinander der n Beleuchtungen ersetzt durch das räumliche Nebeneinander von n Beleuchtungen. Jede Phasenlage der Beleuchtung, beispielsweise 0°, 90°, 180°, 270°, welche räumlich nebeneinander vorkommen, entspricht einer Beleuchtung Bn. Unter Umständen können ein oder mehrere weitere solcher Projektoren mit abweichendem Streifenabstand zum Einsatz kommen, um die Mehrdeutigkeit zwischen verschiedenen Streifen zu beseitigen. Diese Mehrdeutigkeit entsteht dadurch, dass das Streifenmuster sinusförmig ist, dabei wiederholen sich dunkle und helle Streifen periodisch. Auch diese Projektoren können jeweils ein einziges Muster projizieren und werden nacheinander aktiviert. Beträgt die Streifenperiode mehr als n benachbarte Zeilen, so lassen sich auch n Zeilen mit einem jeweiligen Abstand von mehr als einem Pixel auslesen. Ein weiterer Vorteil des erfindungsgemäßen Verfahrens liegt darin, dass zwischen der Bildaufnahme in verschiedenen Phasenlagen eine äußerst geringe Zeit liegt und eine Beeinträchtigung der Messung durch Vibration unterdrückt werden kann. Dadurch also, dass die Bildaufnahmedauer sehr kurz ist, wirkt sich das Schwingen der Anordnung nicht negativ auf die Bildaufnahme aus, es ist also auch keine Schwingungsstabilisierung des Messaufbaus notwendig.

Abbildung 12e zeigt das erfindungsgemäße Verfahren für die Anwendung in der Streifenprojektion und eine Drehbewegung des Prüfgegenstandes G in Richtung des Pfeils 1 um die Rotationsachse 3. Gleiche Teile sind mit gleichen Bezugsziffern versehen, sodass insofern auf die vorhergehenden Abbildungen verwiesen wird.

Abbildung 13a zeigt das erfindungsgemäße Verfahren angewandt auf das an sich bekannte Verfahren der interferometrischen Prüfung, das sich insbesondere für optisch glatte Oberflächen eignet, da sehr feine Strukturen erfasst werden können, deren Rauhigkeit kleiner als die Wellenlängen sichtbaren Lichts, also kleiner als ca. 0,5 µm ist.

Im oberen Teil der Abbildung 13a ist eine zeitlich kohärente Lichtquelle, beispielsweise ein Laser L erkennbar, der als Lichtquelle dient. Das Blickfeld einer Kamera K ist auf den Prüfgegenstand G ausgerichtet. Die Bereiche L5 bis L8 repräsentieren die Aufnahmebereiche der Zeilen Z1 bis Z4 des Kamerachips C. Ein Merkmal X befindet sich im Bereich der Zeile Z4. Der Prüfgegenstand bewegt sich in Richtung des Pfeils 1. Der vom Laser L ausgesandte Strahl einer bestimmten Wellenlänge, wird einerseits durch einen Strahlteiler T auf die Oberfläche des Prüfgegenstands G und andererseits auf einen Spiegel P abgelenkt. Auf der Oberfläche des Prüfgegenstands G wird der Strahl reflektiert und trifft wieder auf den Strahlteiler T. Der auf den Spiegel P auftreffende Strahl wird ebenfalls zurück zum Strahlteiler T reflektiert. Im Strahlteiler T treffen die beiden Strahlen wieder aufeinander und überlagern sich. Die Kamera K ist so ausgerichtet, dass das überlagerte Licht auf sie trifft. Durch die unterschiedlich langen Wege, die das Licht zum Prüfgegenstand G und zum feststehenden Spiegel P zurücklegt, ergibt sich bei einem Unterschied der Lichtwege von 0, 1, 2, 3, 4, ... mal die Wellenlänge des Lasers, bei der Überlagerung (Interferenz) im Strahlteiler T Helligkeit (konstruktive Interferenz) und bei einem Unterschied von 0.5, 1.5, 2.5, ...mal die Wellenlänge des Lasers Dunkelheit (destruktive Interferenz). Aus der Verteilung von Helligkeit und Dunkelheit (Interefernzstreifen) kann man auf die 3D-Gestalt des Prüfgegenstands G schließen.

Im unteren Teil der Abbildung 13a sind eine Draufsicht auf den Prüfgegenstand G sowie Projektionen der Zeilen Z1 bis Z4 des Kamerachips C und des erzeugten Interferenzmusters zu sehen. Auch erkennbar ist das Merkmal X der Prüfgegenstandsoberfläche, das sich hier in einem Bereich der Zeile Z1 befindet.

Als Interferometertyp ist hier, wie oben beschrieben, beispielhaft ein Michelson-Interferometer gezeigt, ebenso sind aber andere Typen wie Mach-Zehnder und viele andere möglich. Obwohl der Mechanismus bei der Entstehung der Interferenzstreifen ein völlig anderer ist als bei der Streifenprojektion, lässt sich das erfindungsgemäße Verfahren nahezu 1:1 von der Streifenprojektion auf die Interferometrie übertragen. Auch hier kann durch eine geeignete Wahl der Streifenperiode (z. B. durch Verkippen des Spiegels P oder der Ebene des Prüfgegenstands G) passend zum Abstand von n Zeilen erreicht werden, dass in den n Zeilen phasengeschobene Intensitätswerte erfasst werden, für n=4 in der Zeile Z4 0°, Z3 90°, Z2 180° und Z1 270°. Auch hier ergibt sich eine deutliche Vereinfachung und Kostensenkung, da ein statisches Interferometer ohne Einrichtung zum Phasenschieben benutzt werden kann. In diesem Fall ist das zeitliche Nacheinander der n Beleuchtungen ersetzt durch das räumliche Nebeneinander von n Beleuchtungen. Jede Phasenlage der Beleuchtung, beispielsweise 0°, 90°, 180°, 270°, welche räumlich nebeneinander vorkommen, entspricht einer Beleuchtung Bn. Auch die Empfindlichkeit gegenüber Vibrationen der Messapparatur bzw. des Interferometers wird deutlich gesenkt. Dadurch, dass die Bildaufnahme so schnell erfolgt, haben Schwingungen, die durch die Einflüsse der Umgebung ausgelöst werden können, keine negativen Auswirkungen auf die Bildaufnahme.

Alternativ können unterschiedliche Streifenabstände realisiert werden, beispielsweise durch eine oder mehrere weitere Lichtquellen mit unterschiedlicher Wellenlänge (Mehrwellenlängen-Interferometrie). Diese Lichtquellen können in kurzem zeitlichen Abstand geschaltet werden, insbesondere wenn es sich um Halbleiterlaser handelt.

Abbildung 13b zeigt eine Anwendung für die Drehbewegung eines Prüfgegenstands G in Richtung des Pfeils 1 um eine Rotationsachse 3 und die Erfassung von im Wesentlichen rotationssymmetrischen Prüfgegenständen G, die bisher für eine interferometrische Prüfung nicht oder nur sehr schwer zugänglich waren. Gleiche Teile sind mit gleichen Bezugszeichen versehen, sodass insofern auf die vorangehenden Abbildungen verwiesen wird.

Abbildung 14a zeigt das erfindungsgemäße Verfahren für das an sich bekannte Verfahren der Weißlichtinterferometrie, welches für optisch glatte aber auch für optisch raue Oberflächen, das heißt Oberflächen, deren Rauigkeit größer als ca. 0.5 µm ist, geeignet ist.

Im oberen Teil der Abbildung 14a ist eine Lichtquelle LQ, eine Kamera K, ein Strahlteiler T sowie ein Spiegel P dargestellt. Das Sichtfeld der Kamera K ist auf den Prüfgegenstand G ausgerichtet, der sich in Richtung des Pfeils 1 bewegt. Die Lichtquelle LQ kann beispielsweise LED's, Glühlampen oder ähnliches umfassen. Zur Interferenzerscheinung tragen mehrere Wellenlängen bei. Maximale Helligkeit ergibt sich, wenn beide Lichtwege, also vom Strahlteiler T zum Spiegel P und zurück, und vom Strahlteiler T zum Prüfgegenstand G und zurück, gleich lang sind. In der Regel ist es nötig, entweder den Spiegel P oder den Prüfgegenstand G in sehr vielen kleinen Schritten zu verschieben (beispielsweise immer um eine Viertel Wellenlänge), um beide Lichtwege abzugleichen. Die Helligkeitsvariationen werden dann von der Kamera K erfasst.

Bei diesem Verfahren wird die Streifenperiode vorteilhaft ebenfalls so gewählt, dass beispielsweise vier Zeilen Z1 bis Z4 einer Streifenperiode entsprechen, andere Anzahlen sind möglich. Da der Streifenkontrast bei der Weißlichtinterferometrie von einem Streifen zum nächsten zu oder abnimmt, ist es hier sinnvoll, mehr als einen Streifen aufzunehmen und beispielsweise 100 x 4 Zeilen auszulesen. Das Maximum des Streifenkontrastes zeigt an, in welcher Höhe sich ein Merkmal über der Bewegungsebene befindet. Vorteile des erfindungsgemäßen Verfahrens sind auch hier, dass keine Einrichtung zum Phasenschieben benötigt wird und der Aufbau deshalb einfach und kostengünstig realisiert werden kann sowie Einflüsse von Vibrationen unterdrückt werden, durch die schnelle Bildaufnahme.

Auch hier ist das zeitliche Nacheinander der n Beleuchtungen ersetzt durch das räumliche Nebeneinander von n Beleuchtungen. Jede Phasenlage der Beleuchtung, welche räumlich nebeneinander vorkommen, entspricht einer Beleuchtung. Zudem ist die Weißlichtinterferometrie praktikabel für die Vermessung der Mantelfläche von im Wesentlichen rotationssymmetrischen Teilen. Abbildung 14b stellt einen Aufbau in Seitenansicht und in Draufsicht dar, bei dem sich ein rotationssymmetrischer Prüfgegenstand G in Richtung des Pfeils 1 um eine Rotationsachse 3 dreht.

Alternativ kann anstelle einer Matrixkamera auch eine spezielle Kamera K eingesetzt werden, deren Kamerachip C nur einige wenige Zeilen umfasst. Insbesondere sind Kameras und Chips von Interesse, die beispielsweise zwei, drei, vier bis zu etwa 100 Zeilen umfassen. Solche Kameras stellen den Übergang zwischen Zeilenkameras und Matrixkameras dar.

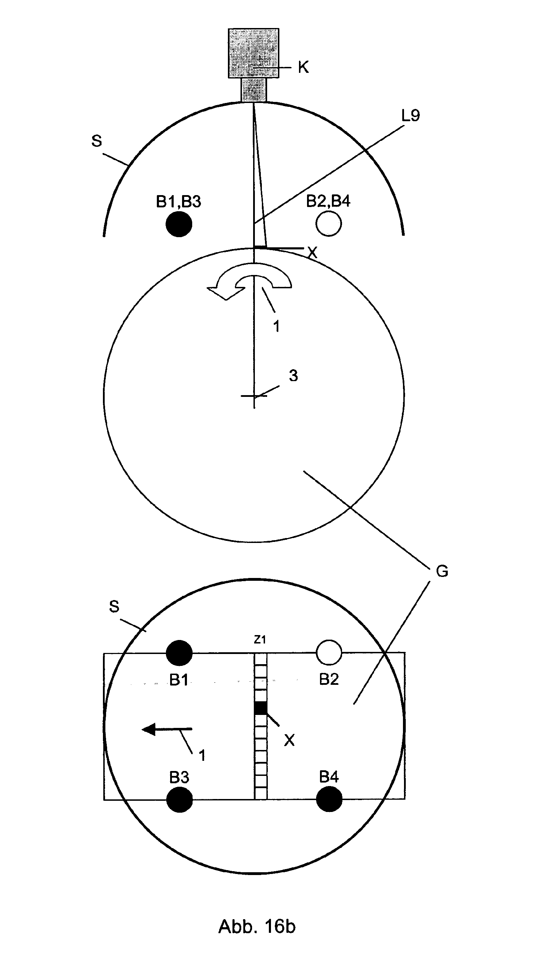

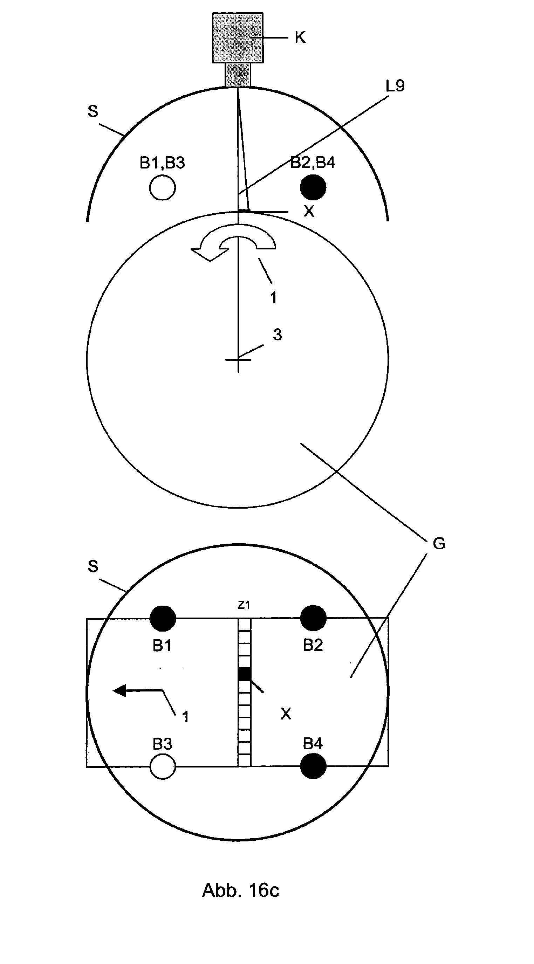

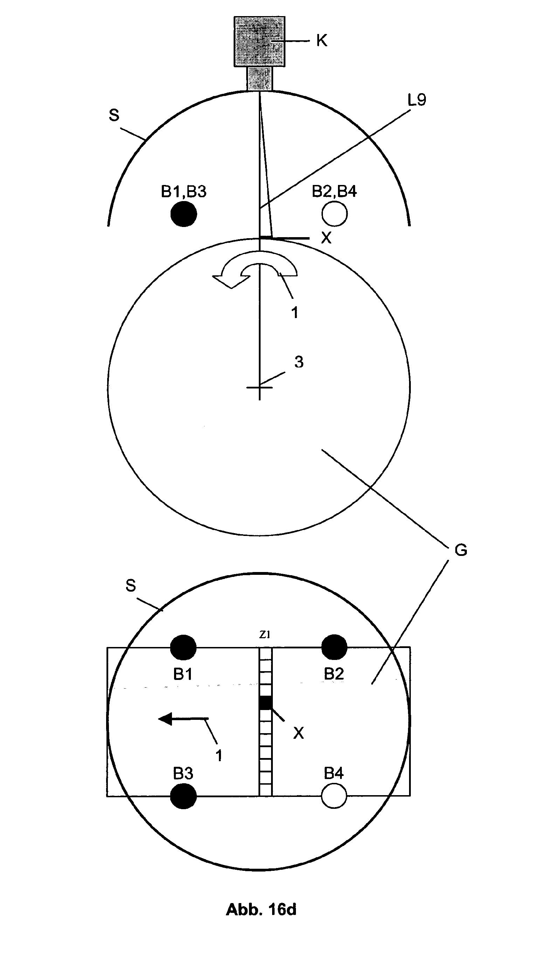

Solche Kameras mit n=3 Zeilen sind als Farbkameras verfügbar. Dabei ist jede Zeile mit einem eigenen Farbfilter versehen. Noch besser geeignet für das erfindungsgemäße Verfahren sind Schwarz-Weiß-Kameras mit drei Zeilen, die ebenfalls verfügbar sind. Bei solchen Kameras kann die Besonderheit darin bestehen, dass der Abstand benachbarter Zeilen ein Mehrfaches des Pixelabstandes innerhalb einer Zeile beträgt, beispielsweise das Achtfache. Der Prüfgegenstand kann sich von Aufnahme zu Aufnahme um den Zeilenabstand weiterbewegen, das erfindungsgemäße Verfahren ist dann wie beschrieben durchzuführen. Vorteilhaft wird der Prüfgegenstand aber nur um einen Pixelabstand von Aufnahme zu Aufnahme weiterbewegt. Für diesen Fall werden vorteilhaft n=3 Beleuchtungen für 8 Aufnahmen aktiv geschaltet, bevor zur nächsten Beleuchtung gewechselt wird. Dieses Vorgehen ist äquivalent dazu, dass bei einem Chip mit einem Zeilenabstand welcher dem Pixelabstand entspricht, 8n=24 Zeilen ausgelesen werden. Die Anordnung der Bilder im Speicher kann dann vorteilhaft entsprechend Abbildung 10a und 24 Zeilen vorgenommen werden. Alternativ ist es auch möglich, nur n=2 der drei Kamerazeilen zu nutzen. Dann entspricht die Anordnung im Speicher vorteilhaft Abbildung 10a und 16 Zeilen.

Es sind weitere Kameras mit einer höheren Zahl von Zeilen verfügbar, die beispielsweise 96 oder 100 Zeilen umfassen. Solche Kameras werden häufig nach dem TDI-Verfahren (Time Delay Integration) genutzt. Manche dieser Kameras können aber auch als Matrixkameras (area mode) genutzt werden. Diese speziellen Kameras können vorteilhaft für das erfindungsgemäße Verfahren genutzt werden, insbesondere, wenn sie als Matrixkamera betrieben werden. In der Regel ist hier der Zeilenabstand gleich oder ähnlich dem Pixelabstand, wie es bei anderen Flächenkameras üblich ist.

### Verfahren für mehrere Matrixkameras

Darüber hinaus sind weitere Varianten denkbar, bei denen Standard-Matrixkameras mit jeweils nur einem Shutter S zum Einsatz kommen und dennoch eine enge zeitliche Abfolge von Bildern erreicht wird. Hierzu wird eine Stereoanordnung von n Kameras K1 bis Kn so modifiziert, dass sie diesen Zweck erfüllen kann. Die Kamerachips C der Kameras Kn werden dabei nicht wie allgemein üblich gleichzeitig belichtet, sondern mit geringfügigem zeitlichem Versatz. Dieser zeitliche Versatz ist erfindungsgemäß sehr viel kürzer, als es der Bildwiederholfrequenz entspricht. Dieser Versatz beträgt vorzugsweise die Belichtungsdauer eines Kamerachips C. Die n Beleuchtungen B1 bis Bn sind so gesteuert, dass eine erste Beleuchtung B1 gleichzeitig zur Belichtung der Kamera K1 mit dem Shutter S1 erfolgt, die Beleuchtung B2 zur Belichtung der Kamera K2 mit dem Shutter S2 bis zur Beleuchtung Bn der Kamera Kn mit dem Shutter Sn. Alternativ ist es möglich, dass die Beleuchtung kürzer aktiviert ist als es der Shutterzeit entspricht. Auch hier ist n=2 eine besonders interessante Variante.

Direkt nach der Belichtung des Kamerachips C einer Kamera Kn durch eine Beleuchtung Bn wird der Kamerachip C einer nächsten Kamera Kn mit einer nächsten Beleuchtung Bn belichtet. Dieser Vorgang wiederholt sich. Erst nach der Belichtung eines Kamerachips C der Kamera Kn, wird ein Teil des Kamerachips C ausgelesen. Korrespondierende Zeilen, also Zeilen der verschiedenen Kamerachips C, die unter verschiedenen Beleuchtungssituationen aufgenommen wurden, werden dabei unter Berücksichtigung einer Disparität der Kameras Kn in einem Speicher entsprechend angeordnet.

Zunächst scheint dieser Ansatz abwegig, denn bei einer Stereoanordnung besteht -in der Regel beabsichtigt- ein Versatz der Bilder von Kamera K1 bis Kn. Aus diesem Versatz, der so genannten Disparität, wird üblicherweise das Messsignal gewonnen, nämlich die räumliche Tiefe. Jede Variation der Disparität bedeutet einen Höhenunterschied des zu vermessenden Gegenstandes und wird möglichst genau festgestellt. Für das erfindungsgemäße Verfahren ist das Gegenteil der Fall, hier wird die Disparität so gut wie möglich minimiert und konstant gehalten. Man erreicht dies dadurch, dass die Kameras mit möglichst geringem Abstand voneinander platziert werden.

Abbildung 15 beschreibt einen Aufbau mit zwei Kameras K1 und K2. Vorzugsweise werden die beiden Kameras mit ihrer optischen Achse parallel zueinander ausgerichtet. Der Prüfgegenstand G ist in einer Ebene senkrecht zu den optischen Achsen der Kameras K1 und K2 positioniert. Besonders vorteilhaft ist es, wenn der Prüfgegenstand G im Wesentlichen eben ist und durch eine -beispielsweise mechanische - Einrichtung immer in dieser Ebene geführt wird.

Die Disparität ist dann in allen Bereichen der Bilder lediglich ein konstanter Versatz um eine gewisse Anzahl von Pixelabständen. Vorzugsweise wird der Abstand der Kameras genau so justiert, dass die Disparität ein ganzzahliges Vielfaches des Pixelabstandes beträgt. Somit gelingt es, korrespondierende Pixel ohne Interpolation zu gewinnen. Alternativ kann der Abstand frei gewählt werden oder auch die Ausrichtung der Kameraachsen frei bestimmt werden. In diesem Fall ist dann aber eine Interpolation notwendig, um korrespondierende Pixel, also Pixel die den gleichen Ort der Prüfgegenstandsoberfläche G aufnehmen, zu gewinnen.

Wenn mehr als zwei Kameras verwendet werden, können diese in einer Reihe angeordnet werden oder auch flächig. Beispielsweise lassen sich vier Kameras in einer quadratischen 2 x 2 Anordnung anbringen, was die Abstände minimiert. Der Sonderfall für eine Disparität Null kann erreicht werden, wenn zwei Kameras über einen Strahlteiler genau gleich auf den Prüfgegenstand G ausgerichtet werden.

### Verfahren für eine Kamera und mehrere Umdrehungen

Allen diesen Varianten ist gemeinsam, dass eine Folge von Bildern mit geringstem zeitlichem Abstand aufgenommen werden kann, insbesondere dann, wenn sich der zu prüfende Gegenstand in Bewegung befindet. Für den besonderen Fall, dass der Prüfgegenstand G rotiert, beispielsweise wenn die Mantelfläche eines rotationssymmetrischen Prüfgegenstandes erfasst werden soll, ist eine weitere, nicht zur Erfindung gehörende Alternative möglich: Hierbei wird der Prüfgegenstand G während der Drehbewegung mit einer Zeile Z1 eines Kamerachips C abgetastet, während eine erste Beleuchtung B1 aktiv ist.

Die Abbildungen 16a bis 16d zeigen eine Anwendung des Verfahrens mit der photometrischen Deflektometrie beispielhaft mit vier Beleuchtungen B1 bis B4. Gleiche Teile sind mit gleichen Bezugsziffern versehen, sodass insofern auf die vorhergehenden Abbildungen verwiesen wird.

Im oberen Teil der Abbildungen 16a bis 16d ist eine Seitenansicht des Aufbaus der photometrischen Deflektometrie dargestellt. Der Bereich L9 im oberen Teil der Abbildungen 16a bis 16d bezeichnet das auf den Prüfgegenstand G gerichtete Blickfeld der Zeile Z1. Der Prüfgegenstand G rotiert in Richtung des Pfeils 1 um die Rotationsachse 3. Weiterhin befindet sich ein Merkmal X auf dem rotierenden Prüfgegenstand G. Der helle Kreis kennzeichnet jeweils die aktive Beleuchtung.

Der untere Teil der Abbildungen 16a bis 16d stellt eine Draufsicht des Aufbaus, ohne die Kamera K dar. Es ist ein Oberflächenausschnitt des Prüfgegenstands G erkennbar, auf den schematisch eine Zeile Z1 des Kamerachips C der Kamera K projiziert ist, sodass die Synchronisierung zwischen den Beleuchtungen B1 bis B4 und der Zeile Z1 darstellbar ist.

Andere Verfahren wie beispielsweise das photometrische Stereo, die Streifenprojektion und interferometrische Verfahren sind ebenfalls möglich. Wie in Abbildung 16b gezeigt ist, wird nach einer vollen Umdrehung anstelle der Beleuchtung B1, die Beleuchtung B2 aktiviert. Nach einer weiteren Umdrehung wird zur nächsten Beleuchtung B3 und nach einer weiteren Umdrehung zu Beleuchtung B4 gewechselt, wie in den Abbildungen 16c und 16d dargestellt ist. Die gewünschte Anzahl von Beleuchtungssituationen kann variieren. Wichtig hierbei ist, dass bei jeder Umdrehung die einzelnen Zeilen genau deckungsgleich zu den vorhergehenden Umdrehungen erfasst werden. Dies kann beispielsweise durch einen Drehgeber erreicht werden.

Besonders vorteilhaft ist es, wenn für das erfindungsgemäße Verfahren eine Zeilenkamera, insbesondere aber eine hoch lichtempfindliche Zeilenkamera verwendet wird. Eine solche an sich bekannte hochempfindliche Zeilenkamera verfolgt ein Merkmal X des Prüfgegenstandes G über mehrere Zeilen hinweg durch Ladungsverschiebung und erreicht damit eine Summationswirkung in der Belichtung. Diese Technik ist als TDI-Technologie (Time Delay Integration) bekannt.

Abbildung 16e zeigt das erfindungsgemäße Verfahren zusammen mit einer solchen Kamera. Im unteren Teil der Abbildung 16e ist ein Zeilenmuster des Kamerachips C der Kamera K auf den Prüfgegenstand G projiziert. Die Ansammlung der Ladung von rechts nach links ist durch eine wachsende Graufärbung angedeutet. Ein besonderer Vorteil dieser Ausgestaltung der Erfindung liegt darin, dass die meist geringe Lichtmenge bei Zeilenkameraanwendungen typisch bis zu einem Faktor 100 erhöht werden kann und gleichzeitig die Belichtungszeit reduziert und eine schnellere Bewegung des Prüfgegenstandes ermöglicht wird. Damit werden eine drastische Reduzierung der Erfassungs- bzw. Prüfzeit und der Erfassungs- bzw. Prüfkosten erzielt.

## Patentansprüche

1. Verfahren zur Aufnahme einer Anzahl von Bildern eines Gegenstandes (G) in kurzer zeitlicher Folge mit mindestens einer Kamera (K) unter Verwendung von mindestens drei unterschiedlichen Beleuchtungen, **dadurch gekennzeichnet, dass** die Beleuchtungen (B1 bis Bn) zeitlich nacheinander betrieben werden und dass für jede aktivierte Beleuchtung (B1 bis Bn) dieselbe Anzahl von Zeilen (Z1 bis Zn) eines Kamerachips (C) ausgelesen wird, wobei für jede aktivierte Beleuchtung (B1 bis Bn) nur ein Teilbereich des Kamerachips (C) ausgelesen wird, nämlich so viele Zeilen (Z1 bis Zn) des Kamerachips (C), wie Bilder mit verschiedenen Beleuchtungen (B1 bis Bn) aufzunehmen sind oder ein Vielfaches davon, und wobei die kurze zeitliche Folge kurz ist im Vergleich zu einer zeitlichen Folge, die bei einem Auslesen aller Zeilen des Kamerachips (C) erreicht werden kann.

2. Verfahren zur Aufnahme einer Anzahl von Bildern eines Gegenstandes (G) in kurzer zeitlicher Folge mit mindestens einer Kamera (K) unter Verwendung von mindestens drei unterschiedlichen Phasenlagen einer strukturierten Beleuchtung, nämlich einem Streifenmuster oder einem Interferenzmuster, **dadurch gekennzeichnet, dass** die Phasenlagen räumlich nebeneinander betrieben werden, wobei der Gegenstand (G) relativ zu der strukturierten Beleuchtung bewegt wird, so dass ein bestimmtes Merkmal (X) des Gegenstands (G) zu unterschiedlichen Zeitpunkten in den unterschiedlichen Phasenlagen der strukturierten Beleuchtung zu liegen kommt, wobei eine Geschwindigkeit der Bewegung des Gegenstands (G) und/oder ein Zeitpunkt von Ausleseprozessen so gewählt ist/sind, dass sich der Prüfgegenstand (G) zwischen zwei Ausleseprozessen um einen Pixelabstand oder ein Vielfaches davon weiterbewegt, und dass für jede Phasenlage, in welcher das Merkmal (X) zu liegen kommt, dieselbe Anzahl von Zeilen (Z1 bis Zn) des Kamerachips (C) ausgelesen wird, wobei für jede Phasenlage, in welcher das Merkmal (X) zu liegen kommt, nur ein Teilbereich des Kamerachips (C) ausgelesen wird, nämlich so viele Zeilen (Z1 bis Zn) des Kamerachips (C), wie Bilder mit verschiedenen Phasenlagen aufzunehmen sind oder ein Vielfaches davon, und wobei die kurze zeitliche Folge kurz ist im Vergleich zu einer zeitlichen Folge, die bei einem Auslesen aller Zeilen des Kamerachips (C) erreicht werden kann.

3. Verfahren nach einem der Ansprüche 1 oder 2, **dadurch gekennzeichnet, dass** jeweils dieselben Zeilen (Z1 bis Zn) des Kamerachips (C) ausgelesen werden.

4. Verfahren nach einem der vorangehenden Ansprüche, **dadurch gekennzeichnet, dass** die Messwerte der ausgelesenen Zeilen (Z1 bis Zn) an eine Recheneinheit (R) übertragen werden, und dort in einem Speicher so aneinandergereiht werden, dass Aufnahmen vom gleichen Ort des Prüfgegenstands (G) jeder Beleuchtungssituation (B1 bis Bn) in korrespondierenden Speicherbereichen angeordnet sind.

5. Verfahren nach einem der vorangehenden Ansprüche, **dadurch gekennzeichnet, dass** es sich bei der Kamera (K) um eine Matrixkamera handelt.

6. Verfahren nach einem der vorangehenden Ansprüche, **dadurch gekennzeichnet, dass** es sich um eine Kamera (K) handelt, deren Kamerachip (C) nur wenige Zeilen, vorzugsweise ca. 100 Zeilen, oder vorzugsweise 3 bis 4 Zeilen, umfasst.

7. Verfahren nach einem der Ansprüche 1 oder 3 bis 6, **dadurch gekennzeichnet, dass** sich der Prüfgegenstand (G) gegenüber der Kamera (K) bewegt.

8. Verfahren nach einem der Ansprüche 2 oder 7, **dadurch gekennzeichnet, dass** sich der Prüfgegenstand (G) geradlinig bewegt.

9. Verfahren nach einem der Ansprüche 2 oder 7, **dadurch gekennzeichnet, dass** der Prüfgegenstand (G) eine Rotationsbewegung durchführt.

10. Verfahren nach einem der Ansprüche 2 oder 7, **dadurch gekennzeichnet, dass** der Prüfgegenstand (G) eine Schraubenbewegung durchführt.

11. Verfahren nach einem der vorangehenden Ansprüche 7 bis 10, **dadurch gekennzeichnet, dass** die Geschwindigkeit der Bewegung und/oder der Zeitpunkt der Ausleseprozesse so gewählt ist, dass sich der Prüfgegenstand (G) zwischen zwei Ausleseprozessen um einen Pixelabstand oder ein Vielfaches davon weiterbewegt.

12. Verfahren nach einem der vorangehenden Ansprüche, **dadurch gekennzeichnet, dass** die ausgelesenen Zeilen (Z1 bis Zn) in einer Recheneinheit (R) nach den zugehörigen aktiven Beleuchtungen (B1 bis Bn) getrennt werden.

13. Verfahren nach einem der vorangehenden Ansprüche, **dadurch gekennzeichnet, dass** korrespondierende Bereiche des Gegenstandes (G) unter den Beleuchtungen (B1 bis Bn) angegeben werden können.

14. Verfahren nach einem der vorangehenden Ansprüche, **dadurch gekennzeichnet, dass** es in Verbindung mit dem Verfahren der photometrischen Deflektometrie angewandt wird.

15. Verfahren nach einem der vorangehenden Ansprüche, **dadurch gekennzeichnet, dass** es in Verbindung mit dem photometrischen Stereoverfahren angewandt wird.

16. Verfahren nach einem der vorangehenden Ansprüche, **dadurch gekennzeichnet, dass** es in Verbindung mit dem Verfahren der Streifenprojektion angewandt wird.

17. Verfahren nach einem der vorangehenden Ansprüche, **dadurch gekennzeichnet, dass** es in Verbindung mit dem Verfahren der Interferometrie angewandt wird.

18. Verfahren nach einem der vorangehenden Ansprüche, **dadurch gekennzeichnet, dass** es in Verbindung mit dem Verfahren der Weißlichtinterferometrie angewandt wird.

19. Verfahren nach einem der vorangehenden Ansprüche, **dadurch gekennzeichnet, dass** es in Verbindung mit einem Stereoverfahren angewandt wird.

## Claims

1. A method for recording a number of images of an object (G) within a short time sequence by means of at least one camera (K) using at least three different illuminations, **characterized in that** the illuminations (B1 to Bn) are operated consecutively in time and that the same number of lines (Z1 to Zn) of a camera chip (C) is read out for every activated illumination (B1 to Bn), wherein only a partial area of the camera chip (C) is read out for every activated illumination (B1 to Bn), namely as many lines (Z1 to Zn) of the camera chip (C) as images are to be recorded with different illuminations (B1 to Bn) or a multiple thereof, and wherein the short time sequence is short as compared to a time sequence, which can be reached when reading out all of the lines of the camera chip (C).

2. The method for recording a number of images of an object (G) within a short time sequence by means of at least one camera (K) using at least three different phase positions of a structured illumination, namely a striped pattern or an interference pattern, **characterized in that** the phase positions are operated spatially next to one another, wherein the object (G) is moved relative to the structured illumination, so that a certain feature (X) of the object (G) comes to rest in the different phase positions of the structured illumination at different points in time, wherein a speed of the movement of the object (G) and/or a point in time of read-out processes is/are chosen such that the test object (G) continues to move at a pixel pitch or a multiple thereof between two read-out processes, and that the same number of lines (Z1 to Zn) of the camera chip (C) is read out for every phase position, in which the feature (X) comes to rest, wherein only a partial area of the camera chip (C) is read out for every phase position, at which the feature (X) comes to rest, namely as many lines (Z1 to Zn) of the camera chip (C) as images are to be recorded at different phase positions or a multiple thereof, and wherein the short time sequence is short as compared to a time sequence, which can be reached when reading out all of the lines of the camera chip (C).

3. The method according to any one of claims 1 or 2, **characterized in that** the same lines (Z1 to Zn) of the camera chip (C) are read out in each case.

4. The method according to any one of the preceding claims, **characterized in that** the measuring values of the read-out lines (Z1 to Zn) are transferred to a computing unit (R), and are strung together there in a memory such that recordings of the same location of the test object (G) of each illuminating situation (B1 to Bn) are arranged in corresponding memory areas.

5. The method according to any one of the preceding claims, **characterized in that** the camera (K) is a matrix camera.

6. The method according to any one of the preceding claims, **characterized in that** it is a camera (K), the camera chip (C) of which comprises only a few lines, preferably approximately 100 lines, or preferably 3 to 4 lines.

7. The method according to any one of claims 1 or 3 to 6, **characterized in that** the test object (G) moves with respect to the camera (K).

8. The method according to any one of claims 2 or 7, **characterized in that** the test object (G) moves in a straight line.

9. The method according to any one of claims 2 or 7, **characterized in that** the test object (G) performs a rotational motion.

10. The method according to any one of claims 2 or 7, **characterized in that** the test object (G) performs a screw motion.

11. The method according to any one of the preceding claims 7 to 10, **characterized in that** the speed of the motion and/or the point in time of the read-out processes is chosen such that the test object (G) continues to move at a pixel pitch or a multiple thereof between two read-out processes.

12. The method according to any one of the preceding claims, **characterized in that** the read-out lines (Z1 to Zn) are separated in a computing unit (R) according to the corresponding active illuminations (B1 to Bn).

13. The method according to any one of the preceding claims, **characterized in that** corresponding areas of the object (G) can be specified under the illuminations (B1 to Bn).

14. The method according to any one of the preceding claims, **characterized in that** said method is applied in conjunction with the method of photometrical deflectometry.

15. The method according to any one of the preceding claims, **characterized in that** said method is applied in conjunction with the photometric stereo method.

16. The method according to any one of the preceding claims, **characterized in that** said method is applied in conjunction with the method of strip projection.

17. The method according to any one of the preceding claims, **characterized in that** said method is applied in conjunction with the method of interferometry.

18. The method according to any one of the preceding claims, **characterized in that** said method is applied in conjunction with the method of white-light interferometry.

19. The method according to any one of the preceding claims, **characterized in that** said method is applied in conjunction with a stereo method.

## Revendications

1. Procédé de prise d'un nombre de clichés d'un objet (G) dans une suite temporelle courte comprenant au moins une caméra (K) en utilisant au moins trois éclairages différents, **caractérisé en ce que**, les éclairages (B1 à Bn) sont utilisés l'un après l'autre dans le temps et que pour chaque éclairage (B1 à Bn) activé, le même nombre de lignes (Z1 à Zn) d'une caméra à puce (C) est lu, sachant que pour chaque éclairage (B1 à Bn) activé, seule une zone partielle de la caméra à puce (C) est lue, à savoir autant de lignes (Z1 à Zn) de la caméra à puce (C) que de clichés avec différents éclairages (B1 à Bn) sont enregistrées ou un multiple de celles-ci, et sachant que la suite temporelle courte est courte en comparaison à une suite temporelle qui peut être atteinte lors d'une lecture de toutes les lignes de la caméra à puce (C).

2. Procédé de prise d'un nombre de clichés d'un objet (G) dans une suite temporelle courte comprenant au moins une caméra (K) en utilisant au moins trois couches de phase différentes d'un éclairage structuré, à savoir d'un modèle de bande ou d'un modèle d'interférence, **caractérisé en ce que** les couches de phase sont utilisées physiquement l'une à côté de l'autre, sachant que l'objet (G) est déplacé par rapport à l'éclairage structuré, de sorte qu'une caractéristique définie (X) de l'objet (G) vient se placer à différents instants dans les différentes couches de phase de l'éclairage structuré, sachant qu'une vitesse du mouvement de l'objet (G) et/ou un instant de processus de lecture est/sont ainsi sélectionné(e)(s) que l'objet d'essai (G) continue de se déplacer d'une distance de pixels ou d'un multiple de celle-ci entre deux processus de lecture, et que pour chaque couche de phase, dans laquelle la caractéristique (X) vient se placer, le même nombre de lignes (Z1 à Zn) de la caméra à puce (C) est lu, sachant que pour chaque couche de phase, dans laquelle la caractéristique (X) vient se placer, seule une zone partielle de la caméra à puce (C) est lue, à savoir autant de lignes (Z1 à Zn) de la caméra à puce (C) que de clichés avec différentes couches de phase sont à prendre ou un multiple de celles-ci, et sachant que la suite temporelle courte est courte en comparaison à une suite temporelle qui peut être atteinte lors d'une lecture de toutes les lignes de la caméra à puce (C).

3. Procédé selon l'une des revendications 1 ou 2, **caractérisé en ce que** respectivement les mêmes lignes (Z1 à Zn) de la caméra à puce (C) sont lues.

4. Procédé selon l'une des revendications précédentes, **caractérisé en ce que** les valeurs de mesure des lignes (Z1 à Zn) lues sont reportées sur une unité de calcul (R), et y sont alignées dans une mémoire de telle sorte que des prises du même endroit de l'objet d'essai (G) à chaque situation d'éclairage (B1 à Bn) sont disposées dans des espaces de mémoire correspondants.

5. Procédé selon l'une des revendications précédentes, **caractérisé en ce que** la caméra (K) est une caméra à matrice.

6. Procédé selon l'une des revendications précédentes, **caractérisé en ce qu'**il s'agit d'une caméra (K) dont la puce de caméra (C) ne comprend que quelques lignes, en préférence environ 100 lignes ou de préférence 3 à 4 lignes.

7. Procédé selon l'une des revendications 1 ou 3 à 6, **caractérisé en ce que** l'objet d'essai (G) se déplace par rapport à la caméra (K).

8. Procédé selon l'une des revendications 2 ou 7, **caractérisé en ce que** l'objet d'essai (G) se déplace de façon linéaire.

9. Procédé selon l'une des revendications 2 ou 7, **caractérisé en ce que** l'objet d'essai (G) effectue un mouvement de rotation.

10. Procédé selon l'une des revendications 2 ou 7, **caractérisé en ce que** l'objet d'essai (G) effectue un mouvement hélicoïdal.

11. Procédé selon l'une des revendications 7 à 10, **caractérisé en ce que** la vitesse de mouvement et/ou l'instant des processus de lecture est ainsi choisi(e) que l'objet d'essai (G) continue de se déplacer d'une distance de pixel ou d'un multiple de celle-ci entre deux processus de lecture.

12. Procédé selon l'une des revendications précédentes, **caractérisé en ce que** les lignes (Z1 à Zn) lues sont séparées en fonction des éclairages (B1 à Bn) actifs correspondants dans une unité de calcul (R).

13. Procédé selon l'une des revendications précédentes, **caractérisé en ce que** des zones correspondantes de l'objet (G) peuvent être signalées sous les éclairages (B1 à Bn).

14. Procédé selon l'une des revendications précédentes, **caractérisé en ce qu'**il est appliqué en liaison avec le procédé de déflectométrie photométrique.

15. Procédé selon l'une des revendications précédentes, **caractérisé en ce qu'**il est appliqué en liaison avec le procédé stéréo photométrique.

16. Procédé selon l'une des revendications précédentes, **caractérisé en ce qu'**il est appliqué en liaison avec le procédé de projection de bandes.

17. Procédé selon l'une des revendications précédentes, **caractérisé en ce qu'**il est appliqué en liaison avec le procédé de l'interférométrie.

18. Procédé selon l'une des revendications précédentes, **caractérisé en ce qu'**il est appliqué en liaison avec le procédé de l'interférométrie en lumière blanche.

19. Procédé selon l'une des revendications précédentes, **caractérisé en ce qu'**il est appliqué en liaison avec un procédé stéréo.
